(19)

Europäisches
Patentamt
European
Patent Office
Office européen
des brevets

(11) **EP 3 726 739 B1**

(12) **EUROPEAN PATENT SPECIFICATION**

(45) Date of publication and mention
of the grant of the patent:
**03.04.2024 Bulletin 2024/14**

(21) Application number: **19170298.4**

(22) Date of filing: **18.04.2019**

(51) International Patent Classification (IPC):
**H04B 7/06** *(2006.01)*     **H04B 7/08** *(2006.01)*

(52) Cooperative Patent Classification (CPC):
**H04B 7/0695; H04B 7/088**

(54) **MEMORY-ASSISTED RADIO FREQUENCY BEAM TRAINING FOR MIMO CHANNELS**

SPEICHERUNTERSTÜTZTES FUNKFREQUENZSTRAHLTRAINING FÜR MIMO-KANÄLE

FORMATION DE FAISCEAUX DE FRÉQUENCE RADIO ASSISTÉE PAR MÉMOIRE POUR CANAUX MIMO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.10.2020 Bulletin 2020/43**

(73) Proprietor: **IHP GmbH - Innovations for High
Performance
Microelectronics / Leibniz-Institut für
innovative Mikroelektronik
15236 Frankfurt (Oder) (DE)**

(72) Inventor: **Tiwari, Krishan Kumar
15232 Frankfurt (Oder) (DE)**

(74) Representative: **Eisenführ Speiser
Patentanwälte Rechtsanwälte PartGmbB
Stralauer Platz 34
10243 Berlin (DE)**

(56) References cited:
**WO-A1-2017/208282     WO-A1-2018/034703
US-A1- 2008 310 380     US-A1- 2019 097 712**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 726 739 B1

**Description**

The invention regards a method for radio frequency (RF) beamforming, a RF beamforming module, and a RF beamforming system including the RF beamforming module. In particular, the invention regards a method for selecting a beam in a massive multiple input multiple output (MIMO) system with sparse massive MIMO channels.

For mm-wave, i.e. 30 GHz to 300 GHz and terahertz frequencies, i.e. 0.1 THz to 10 THz, MIMO channels have only a few multipath components for communication due to high freespace path loss (FSPL), high atmospheric absorption, narrow beams, and small anglespreads. Such MIMO channels are sparse in beamspace. For example, for virtual reality (VR) applications the MIMO channel can be limited to the line-of-sight (LoS) component i.e. such MIMO channels are rank 1 linear systems. They may have utmost rank of 2 to 4 MIMO channels for massive MIMO systems, i.e., MIMO systems with 100 or more transmitters and receivers.

Exhaustive beam search can be used for beam training in beamspace in order to select transmitter and receiver beams that have a maximum received signal strength indication (RSSI). Beam training is also called channel learning or beamforming. For exhaustive beam search, all possible transmitter-receiver (Tx-Rx) beam combinations are tested for the largest RSSI.

S. Hur et al. in "Multilevel millimeter wave beamforming for wireless backhaul", published in IEEE GLOBECOM Workshops, pages 253-257 in December 2011 discloses multi-level (ML) beam search which is an improved algorithm for RF beam training as compared to exhaustive beam search. For multi-level beam search, progressively narrower beams are used in multiple levels of beam training to search the Tx-Rx beam combination with the largest RSSI only for the angular sector identified by the preceding level beam search. Multi-level beam search is also known as hierarchical beam search or tree-based beam search.

US 2008/310380 A1 discloses a system for assisting in providing a wireless communication link between a first communication device and a second communication device based on a plurality of communication paths comprising a history manager for providing, based on a recorded history of communication path states, a proposal for one or more communication paths based on which the communication link can be provided.

WO 2018/034703 A1 discloses an apparatus configured to be employed within one or more nodes. The apparatus includes control circuitry and a transceiver. The control circuitry is configured to identify a set of beam sector pairs using a sector level sweep (SLS), rank the set of beam sector pairs to generate a ranked set of beam sector pairs based on beam ranking criteria, and provide the ranked set of beam sector pairs to a second node. The transceiver is configured to communicate with the second node using a primary beam pair of the ranked set of beam sector pairs. The control circuitry of the nodes is further configured to detect blockage on the primary beam pair and to switch to alternative beam pairs according to the ranking exchanged between the communicating nodes upon blockage detection.

It is an object of the invention to provide a method for RF beamforming, a RF beamforming module, and a RF beamforming system which reduce training time and power consumption.

This object is achieved by a method for selecting beams in a MIMO system including multiple transmitters and multiple receivers for providing first beams and second beams. The first beams are transmitter beams provided by the transmitters or receiver beams provided by the receivers. If the first beams are transmitter beams provided by the transmitters, then the second beams are receiver beams provided by the receivers, and if the first beams are receiver beams provided by the receivers, then the second beams are transmitter beams provided by the transmitters. The method comprises the steps:

- providing for each of the first beams and each of the second beams a probability for establishing a communication link based on beam data including statistically analyzed history data generated by operating the MIMO system, and

- selecting first beams and second beams based on their probability for establishing a communication link in an iterative process until a communication link is established between a selected first beam and a selected second beam.

History data can be statistically analyzed with various statistical methods including data processing methods based on statistics of the history data in order to generate the statistically analyzed history data. Preferably, the statistical methods for statistically analyzing the history data do not include machine learning methods or any method based on artificial intelligence. The history data can be statistically analyzed with non-AI methods based on statistics. This goes against the trend and belief of using AI. Instead simple and direct statistics can be applied to the data. This can allow to reduce computational resource and to lower the carbon footprint.

Selecting beams based on their probability for establishing a communication link allows to reduce training time as finding a combination of beams for which a communication link is established is statistically increased when testing beams with higher probabilities before testing beams with lower probabilities for establishing a communication link. The training time can be reduced to a statistical minimum. Reducing training time reduces required calculation resources, and thus power consumption. Providing probabilities based on beam data including statistically analyzed history data generated by operating the MIMO system allows reducing computational effort and thus resources. In particular, if the statistically analyzed history data is generated by statistical methods not including machine learning or AI methods, less computational resources are required, as machine learning and AI require more computational resources. The saved resources can for example be used for payload data communications.

The first beams and the second beams can be transmitter beams provided by the transmitters or receiver beams provided by the receivers. If the first beams are transmitter beams provided by the transmitters, then the second beams are receiver beams provided by the receivers. If the first beams are receiver beams provided by the receivers, then the second beams are transmitter beams provided by the transmitters. A communication link can be established between a selected transmitter beam and a selected receiver beam.

The inventor gained the insight that in indoor scenarios, e.g., in VR use cases with a limited number of multipath components or only LoS detection, not all the beam directions are equally likely as 1) users wearing VR devices typically start at a designated location in a VR room, 2) users have limited mobility at the typical speed of 4 km/h, 3) scatterers have no or limited mobility, 4) movement profiles of the users are governed by VR applications, and 5) movements to VR room extremities are limited to short durations during the course of VR experiences. Generally not all the beams are equally likely to establish a communication link. This knowledge about the probability of different transmitter beams and receiver beams can be used for improving beamforming. Furthermore statistical analysis of history data included in the beam data can be used to further improve the beamforming, i.e., selection of the transmitter beam and receiver beam that establish a communication link.

The method can be used for selecting beams in massive MIMO systems with sparse massive MIMO channels. The massive MIMO systems can for example be VR systems or augmented reality (AR) systems or fronthaul cellular systems or backhaul cellular systems or automotive systems or Internet of Things (IoT) systems. The transmitters and receivers of the MIMO systems can be operated with frequencies between 0.1 THz and 10 THz, such that the beams can have frequencies between 0.1 THz and 10 THz. Wavelengths can be in the mm-wave or THz range. The beams can for example have a frequency of 240 GHz or 300 GHz. Using frequencies in the THz range allows to provide high-throughput and lowlatency radio communication link between a VR server including the transmitters of the MIMO system and a head mounted display (HMD) including the receivers of the MIMO system. The method allows a fast and efficient RF beamforming, i.e., by reducing training time and required resources, such as processing power as less tests have to be performed for selecting a combination of transmitter beam and receiver beam that establish a communication link. The training time corresponds to the time required for finding a combination of selected first beam and selected second beam that establish a communication link.

The method can for example be used in a VR application, an AR application, or in machineto-machine communication in a factory or a house, e.g., in internet-of-things (IoT) applications. The range of the data communication can for example be between a few cm and several m. The method can be optimized for an indoor space and can for example be used for beam based localization in a room. Alternatively the method can be optimized for an outdoor space, e.g., for backhaul systems. The method can for example be used for quick beam alignment of the transmitter beam and the receiver beam, and therefore fast beam based two-dimensional (2-D) or three-dimensional (3-D) localization in the outside space. Polar coordinates can be converted to Cartesian coordinates using trigonometric relations.

Localization using the method can be more effective and efficient than other methods known in the art such as time of flight (ToF) based methods in terms of computational resources, power consumption, required time, bandwidth, hardware, etc.

The steps performed for selecting the first beams and the second beams in the iterative process can depend on beam entropy. This allows to use a single parameter value, namely the beam entropy, to decide which iterative process allows to reduce the training time and thus processing power to a minimum. The beam entropy depends on the probability distribution or the probability mass function (PMF) of the beams, i.e., the probability of different beams to be beams that establish a communication link. The first beams have a first beam entropy and the second beams have a second beam entropy. The beam entropy can be a weighted sum of the first beam entropy and the second beam entropy. In case that the weight of one of the first beam entropy or the second beam entropy is zero, the beam entropy is based only on the beam entropy that has a non-zero weight. The beam entropy of a system depends on a level of randomness of the probability distribution for establishing a communication link. A higher level of randomness in the probability distribution is associated with a higher beam entropy. For the case that only a few beams have a high probability, the beam entropy is low. In contrast, if the PMF is evenly distributed over the beams, the beam entropy is high. Preferably, the first beams are the beams with the lower beam entropy and the second beams are the beams with the higher beam entropy.

Selecting first beams and second beams based on their probability for establishing a communication link in an iterative process can for example be performed by selecting the transmitter beam and the receiver beam with the highest probability for establishing a communication link at first and subsequently selecting the transmitter beams with the respective next highest probability until all transmitter beams have been tested against the receiver beam with the highest probability. Subsequently, the receiver beam with the next highest probability can be selected and tested against the transmitter beams and this can be repeated until a communication link is established between a selected transmitter beam and a selected receiver beam. Other orders for selecting transmitter beams and receiver beams based on their probability for establishing a communication link in the iterative process are possible, e.g., first testing whether the transmitter beam with highest probability establishes a communication link with any of the receiver beams and subsequently testing whether the transmitter beam with next highest probability establishes a communication link with any of the receiver beams, and so on.

The method can comprise a step of providing a beam ranking for the beams based on the beam data. The iterative process of selecting first beams and second beams can be based on the beam ranks of the beams. The first beams have a first beam ranking and the second beams have a second beam ranking, i.e., the beam ranking includes separate first beam ranking and second beam ranking. If the first beams and second beams are transmitter beams and receiver beams, the transmitter beams can have a transmitter beam ranking and the receiver beams can have a receiver beam ranking, i.e., the beam ranking can include separate transmitter beam ranking and receiver beam ranking. Using the beam ranking allows to consider further parameters besides the probability for establishing a communication link. Further parameters included in the beam data and used for ranking the beams can include current beam rank, link quality, or signal-to-noise ratio (SNR). For example in case that two beams have the same probability for establishing a communication link, the beam with better link quality or SNR provides better modulation and coding schemes (MCS) and therefore better throughput. A dynamically updated beam rank formula for ranking the beams based on probability and optionally one or more of link quality, SNR, link reliability, overall throughput, easiness of beam tracking, or any other parameter included in the beam data can be used to dynamically update beam ranks progressively as more and more information, e.g. in form of history data are available. The link reliability can for example include mean time between failure (MTBF). An update rate for the dynamically updated beam rank formula can be a function of channel characteristics such as coherence time, performance of a beam tracking, or other parameters. Beam tracking can be employed to minimize instances of beam training.

The method can include a step of statistically analyzing history data generated by operating the MIMO system. The history data can include a beam history data including a number of established communication links, communication link quality, SNRs, communication link reliability, ease of beam tracking, current beam rank, or other parameters of the beam history data. The history data can include sensor data such as sensor data generated by a gyroscope or an inertial sensor. The parameters of the beam history data and the sensor data can change the probabilities of the first beams and the second beams. Using statistically analyzed history data allows to reduce training time as over time the data can be more specific to the MIMO system and/or user using the MIMO system.

The method can be performed in beamspace. This allows reduced training time as sparse MIMO channels can be easier to learn in beamspace than in spatial signal space.

In one embodiment, the method comprises the step:

- providing a beam ranking for the beams based on the beam data.

The iterative process of selecting first beams and second beams based on their probability for establishing a communication link until a communication link is established between a selected first beam and a selected second beam can include the steps:

- selecting the highest ranked first beam,

- selecting the highest ranked second beam,

- testing whether the selected first beam and the selected second beam establish a communication link, and

    -- if a communication link establishes:

        --- updating the beam data accordingly, and

    -- if no communication link establishes:

        --- determining whether a cumulative probability of tested second beams is equal to or above a second beams threshold probability, and

            ---- if the cumulative probability of tested second beams is equal to or above the second beams threshold probability:

----- determining whether a cumulative probability of tested first beams is equal to or above a first beams threshold probability, and

------ if the cumulative probability of tested first beams is equal to or above the first beams threshold probability:

------- performing multi-level beam search for determining a first beam and a second beam that establish a communication link and

------- updating the beam data accordingly,

------ if the cumulative probability of tested first beams is below the first beams threshold probability:

------- selecting a next ranked first beam, selecting the highest ranked second beam, and repeat testing whether the selected first beam and selected second beam establish a communication link,

---- if the cumulative probability of tested second beams is below the second beams threshold probability:

----- selecting a next ranked second beam and repeat testing whether the selected first beam and the selected second beam establish a communication link.

The cumulative probability of the tested first beams corresponds to the sum of the probabilities of the tested first beams. The cumulative probability of the tested second beams corresponds to the sum of the probabilities of the tested second beams. The order of selecting first beam and second beam can also be interchanged, i.e., instead of first selecting the highest ranked first beam, the highest ranked second beam can be selected. The beams selected as first beams and second beams can depend on a beam entropy of the beams. Preferably, the beams having a lower beam entropy are selected as first beams, such that the first beams have a lower beam entropy than the second beams. Multi-level beam search offers savings in training overheads and communication loss due to reduced false-beam selections owing to receiver noise.

The threshold probability to be compared to the cumulative probability of tested second beams, i.e., the second beams threshold probability, can be at least 75 %. The threshold probability to be compared to the cumulative probability of tested second beams can also be at least 50 %, at least 60 %, at least 70 %, at least 80 %, or at least 90 %. The threshold probability to be compared to the cumulative probability of tested second beams can depend on the PMF, link quality, SNR, link reliability, overall throughput, or any other parameter included in the beam data. Alternatively or additionally, the threshold probability to be compared to the cumulative probability of tested first beams, i.e., the first beams threshold probability, can be at least 75 %. The threshold probability to be compared to the cumulative probability of tested first beams can also be at least 50 %, at least 60 %, at least 70 %, at least 80 %, or at least 90 %. The threshold probability to be compared to the cumulative probability of tested first beams can depend on the PMF, link quality, SNR, link reliability, overall throughput, or any other parameter included in the beam data. If the PMF of the first beams is different to the PMF of the second beams, the threshold probability to be compared to the cumulative probability of the first beams can be different to the threshold probability to be compared to the cumulative probability of the second beams. The threshold probabilities can be adjusted based on the number of transmitters and receivers. Alternatively or additionally, the threshold probabilities can be adjusted based on the beam entropy, PMF, link quality, SNR, link reliability, overall throughput, or any other parameter included in the beam data. This allows to further reduce the training time. In particular, in cases where no link is established for beams with high probabilities, performing multi-level beam search allows to reduce the training time. For example in cases in which beams with high probability do not establish a communication link, but only a beam with a low probability, using multi-level beam search can reduce training time as testing based on ranks or probability would require a high number of tests. The method can include a step of setting a threshold probability to be compared to the cumulative probability of tested second beams or tested first beams based on the beam data. This allows optimizing the threshold probabilities for reducing training time.

In one embodiment, the iterative process of selecting first beams and second beams based on their probability for establishing a communication link until a communication link is established between a selected first beam and a selected second beam is performed by

-    using multi-level beam search for determining a first beam and a second beam that establish a communication link based on the probabilities for establishing a communication link of the beams.

Multi-level beam search performed based on probabilities for establishing a communication link of the beams or based on ranked beams can reduce the training time compared to multi-level beam search as disclosed in S. Hur et al. in "Multilevel millimeter wave beamforming for wireless backhaul", published in IEEE GLOBECOM Workshops, pages 253-257 in December 2011. Multi-level beam search based on the probabilities for establishing a communication link of the beams is preferably performed for determining the first beam and the second beam that establish a communication link when the probability is almost evenly or evenly distributed among the beams, i.e., when the beam entropy is high. This allows to reduce the training time in dependence of the beam entropy. Multi-level beam search can reduce the number of beam tests needed for finding a selected transmitter beam and a selected receiver beam that establish a communication link or for finding the combination of transmitter beam and receiver beam with the highest RSSI. This allows savings in training overheads and can reduce mean communication loss due to false-beam selections on account of receiver noise which was shown in K. K. Tiwari et al., "Noise performance of Orthogonal RF beamforming for millimeter wave massive MIMO communication systems", The Tenth International Conference of Wireless Communications and Signal Processing (WCSP), Hangzhou, China, Oct. 2018, pp. 1-7 and in K. K. Tiwari et al., "Noise performance of Orthogonal RF beamforming for THz Radio Communications", The Ninth IEEE Annual Computing and Communication Workshop and Conference (CCWC), University of Nevada, Las Vegas, USA, Jan. 2019, pp. 746-751. Multi-level beam search based on probabilities for establishing a communication link of the beams can have lower beam gains for initial beam search levels as smaller number of antenna elements are switched on for beamforming leading to broader beams with lower gains. This can be a limitation for low SNR scenarios at larger ranges or with limited transmit powers. Preferably, narrower beams are selected on a lower level of the multi-level beam search. This allows to provide narrower beams with higher gains.

The multi-level beam search can comprise an initial step of:

-    grouping beams into one or more grouped beams, wherein each grouped beam includes two or more beams.

The following steps can be repeated until a communication link is established that does not include a grouped beam:

-    selecting a first beam and a second beam based on their probability for establishing a communication link, and
-    testing whether a communication link is established between the selected first beam and the selected second beam, wherein

    -- if no communication link is established, the method includes the steps:

        --- selecting another first beam and/or another second beam based on their probability for establishing a communication link and repeat testing whether a communication link is established between the selected first beam and the selected second beam,

    -- if a communication link is established that includes at least one grouped beam, the method includes the steps:

        --- splitting the grouped beam into two or more beams, and

        --- providing for each of the beams split from the grouped beam an updated probability for establishing a communication link based on the beam data and the knowledge that the grouped beam established a communication link, and

    -- if a communication link is established that does not include a grouped beam, the method includes the step:

        --- updating the beam data accordingly.

Updating the probabilities of the beams split from the grouped beam allows to reduce training time, as only the beams split from the grouped beam are considered in the further processing. Only the probabilities of the beams split from the grouped beam need to be updated. This effectively limits the number of beams that have to be tested for establishing the communication link. The reduction of training time increases with larger number of beams.

The two or more beams included in a grouped beam can be narrower than the grouped beam. The grouped beam can be a broader beam than the two or more narrower beams included in the grouped beam. Grouped beams can be broader beams that provide reduced ranges and lower gain but higher probabilities for establishing a communication link.

The beams split from the grouped beams can be narrower and can provide larger distances and higher gain.

The grouping of the two or more of the beams into a grouped beam can be based on their probability for establishing a communication link. Preferably, beams are grouped such that the grouped beam on a highest level have a cumulative probability that is as high as possible. The number of beams in the grouped beam can depend on the number of first beams and/or second beams. The number of beams in the grouped beam can also depend on their PMFs, SNRs, link reliability, or other parameters. Alternatively or additionally a number of levels of the multi-level beam search can depend on the number of first beams and/or second beams. The number of levels of the multi-level beam search can also depend on their PMFs, SNRs, link reliability, or other parameters. The number of levels can alternatively or additionally depend on the probabilities for establishing a communication link of the beams in the grouped beam. The number of levels of the multi-level beam search corresponds to the number of splittings of the grouped beam performed during the multi-level beam search.

The grouped beam can be split into two or more grouped beams of a next level of a multilevel beam search. The grouped beam can also be split into the two or more beams that were grouped in the grouping step. The grouped beam is split into the two or more beams that were grouped in the grouping step on a lowest level of the multi-level beam search. Using a higher number of levels can allow to reduce the training time. Considering the number of first and/or second beams or the probabilities for establishing a communication link of the beams in the grouped beam for the number of levels, allows for adjusting the number of levels such that the training time can be reduced, e.g., to its minimum value for the specific scenario.

The steps performed if a communication link is established that includes at least one grouped beam can include a step of providing an updated probability for the beam that established a communication link with the grouped beam if the beam is not a grouped beam and updating the beam data accordingly for the beam that established a communication link with the grouped beam. This allows to more frequently update the beam data. For example if the selected first beam is a grouped beam and the selected second beam is not, the beam data can be updated for the second beams, e.g., the probabilities can be adjusted in the beam data while for the first beams the updated probabilities are not stored in the beam data but only temporarily stored for performing the multi-level beam search based on dynamically updated probabilities and limited number of beams.

Alternatively or additionally, the steps performed if a communication link is established that includes at least one grouped beam can include a step of providing an updated probability for the beams that established a communication link.

Alternatively or additionally, a beam ranking can be provided whenever a grouped beam is split into two or more beams. The beam ranking can also be based on the updated probability for establishing a communication link provided for the beams split from the grouped beam. The selecting of first beams and second beams in the iterative process can be based on their beam ranks. This allows to perform the iterative selection process based on the beam ranks of the beams.

In one embodiment, the iterative process of selecting first beams and second beams based on their probability for establishing a communication link until a communication link is established between a selected first beam and a selected second beam includes the steps:

- grouping beams into one or more grouped beams, wherein each grouped beam includes two or more beams,

- providing a beam ranking for the beams based on the beam data,

- selecting the highest ranked first beam,

- selecting the highest ranked second beam,

- testing whether the selected first beam and the selected second beam establish a communication link, and

  -- if a communication link establishes that includes at least one grouped beam, the method includes the steps:

    --- splitting the grouped beam into two or more beams, providing for each of the beams split from the grouped beam an updated probability for establishing a communication link based on the beam data and the knowledge that the grouped beam established a communication link, providing a beam ranking for the beams based on the beam data and the updated probability for establishing a communication link, selecting the highest ranked first beam, selecting the highest ranked second beam, and repeat testing whether the selected first beam and the selected second beam establish a communication link,

  -- if a communication link is established that does not include a grouped beam, the method includes the step:

--- updating the beam data accordingly, and

-- if no communication link establishes:

--- determining whether a cumulative probability of tested second beams is equal to or above a second beams threshold probability, and

---- if the cumulative probability of tested second beams is equal to or above the second beams threshold probability:

----- determining whether a cumulative probability of tested first beams is equal to or above a first beams threshold probability, and

------ if the cumulative probability of tested first beams is equal to or above the first beams threshold probability:

------- performing multi-level beam search for determining a first beam and a second beam that establish a communication link and

------- updating the beam data accordingly,

------ if the cumulative probability of tested first beams is below the first beams threshold probability:

------- selecting a next ranked first beam, selecting the highest ranked second beam, and repeat testing whether the selected first beam and selected second beam establish a communication link,

---- if the cumulative probability of tested second beams is below the second beams threshold probability:

----- selecting a next ranked second beam and repeat testing whether the selected first beam and the selected second beam establish a communication link.

The steps performed if a communication link is established that includes at least one grouped beam can include a step of providing an updated probability for the beam that established a communication link with the grouped beam if the beam is not a grouped beam and updating the beam data accordingly for the beam that established a communication link with the grouped beam.

Alternatively or additionally, if a communication link establishes that includes at least one grouped beam, an updated probability for establishing a communication link can be provided to the beams that established the communication link. The beam data can be updated accordingly for a beam that is not a grouped beam. This allows to increase the update frequency and thus to have up to date data with more reliable statistics.

The step of grouping two or more of the beams into a grouped beam before selecting beams in the iterative process is preferably performed when the beam entropy is high. In one embodiment the step of grouping two or more of the beams into a grouped beam is only performed if the beam entropy is above a threshold beam entropy, e.g., above 25 % of a maximal value of the beam entropy. The beams selected as first beams and second beams can depend on the beam entropy of the beams. Preferably, the beams having a lower beam entropy are selected as first beams, such that the first beams have a lower beam entropy than the second beams.

The beam entropy indicates an overall randomness of the beams for successfully establishing a communication link. A more even PMF corresponds to a higher beam entropy. A more uneven PMF corresponds to a lower beam entropy. A highest beam entropy corresponds to the case in which all beams have the same probability for establishing a communication link, i.e., when they are equi-probable. The beam entropy can be defined as

$$Beam\ Entropy = -\sum_{i=1}^{N} p_i \log p_i,$$

where $p_i$ is the probability of beam i for establishing a communication link and N is the total number of beams. The threshold beam entropy can depend on the PMF, a number of beams, or other parameters. A first beam entropy can be determined for the first beams and a second beam entropy can be determined for the second beams. The beam entropy can be determined based on the first beam entropy and the second beam entropy. The beam entropy can be a weighted sum of the first beam entropy and the second beam entropy. The weight of one of the first beam entropy and the second beam entropy can be zero. If the weight of the first beam entropy is zero, then the beam entropy corresponds to the second beam entropy. If the weight of the second beam entropy is zero, then the beam entropy corresponds to the first beam entropy. The weights of the first beam entropy and the second beam entropy can be based on their respective PMF. Preferably, the weight of the beam with a more uneven PMF is higher. The first beam entropy and the second beam entropy can be uncorrelated or correlated. If the first beam entropy and the second beam entropy are correlated, their correlation can be used for reducing training time.

The method can comprise the step:

- determining a beam entropy of the MIMO system which depends on a level of randomness of the probability distribution for establishing a communication link.

Alternatively or additionally, the first beam entropy of the first beams and the second beam entropy of the second beams can be determined.

The first threshold beam entropy and/or the second threshold beam entropy can be adjustable based on beam data. The method can include a step of tuning the first threshold beam entropy and/or the second threshold beam entropy for the different methods. The tuning can for example be performed by providing a scale that can be adjusted in dependence of beam data. The scale can depend on a tradeoff between time for processing and required computational resources. The scale can be used to change a rate for changing the threshold beam entropies based on the beam data. This allows to adjust the tradeoff between required time for finding a beam combination that establishes a communication link and required computational resources.

Updating the beam data accordingly can include increasing the probabilities of the selected first beam and the selected second beam. Updating the data by increasing the probabilities of the selected beams allows to improve the method over time and to reduce the training time if beam data including ever more history data is available, i.e., if the system is operative for a longer time. The probabilities of other beams can be reduced accordingly. The probabilities can for example be increased by a predetermined amount or in dependence of a number of established communications links stored in the beam data. Adjusting the probabilities by a predetermined amount or in dependence of a number of established communication links allows to improve the beam data and/or beam ranking by making it more user specific and/or application specific, e.g., specific for the application of the respective system or VR kiosk specific. A VR kiosk can for example be a provider of transmitters and possibly also receivers of a MIMO system for performing one or more VR applications. The beam data can include user specific history data generated by operating the MIMO system by a specific user. The user specific history data can for example include the information for which percentage of time a user used which beams. This allows to determine improved probabilities of the respective beams as they are based on the specific behavior of the user. The beam data includes model data generated based on model assumptions for the MIMO system. Model assumptions for the MIMO system can include statistics from VR applications, user characteristics, kiosk characteristics, backhaul links or any other information for generating a model. User characteristics can for example include age, height or other information about the user. Kiosk characteristics can for example include a size of a space of the kiosk and locations of the transmitters. For example for outdoor applications the model assumptions can include atmospheric factors, weather factors, wind factors, or electromechanical factors that can be used to generate models such as backhaul links over ranges of hundreds of meters. The model data include statistically analyzed history data of other users, e.g., history data specific to a VR application or a specific VR kiosk. This allows to provide improved models with improved probabilities of the respective beams.

The model assumptions can include a highest probability for a center transmitter beam and lower probabilities for transmitter beams that are farther away from the center transmitter beam than for transmitter beams that are closer to the center transmitter beam, e.g., beams at smaller angular offsets to the center beam are considered to have higher probabilities than beams at larger angular offsets to the center beam. The model assumption includes the knowledge that the Line-of-Sight (LoS) has the highest probability along the center beam. This allows improving the beamforming for cases in which no or only a limited amount of history data is present. Using model data allows to solve the cold start problem.

The method can include the step

- establishing a communication link between the selected first beam and the selected second beam for communicating data.

This allows to provide data communication using the communication link established between the selected first beam and the selected second beam, i.e., between a selected transmitter beam and a selected receiver beam.

The communication link can be considered to be established when for a distance above a threshold distance between the transmitters and receivers, a received power value is above a threshold power value. Alternatively or additionally the communication link can be considered to be established when a data rate, e.g. throughput, is above a threshold data rate. The distance between the transmitters and receivers can be measured using various methods, e.g., based on determining a time-of-flight of a signal. This allows to ensure that a predetermined amount of power, throughput, data rate, or signal can be transmitted using the communication link at least over a certain distance. For optimized beam alignment, the communication link can also be used for wireless power transfer since the power can be efficiently transferred using a focused narrow beam. This can also allow for simultaneous transfer of information and power. The threshold power value and/or threshold data rate can depend on a specific application or usage specific scenario of the MIMO system. The threshold power value and/or the threshold data rate can be based on theoretical calculations and/or on prior beamforming processes. For example, the threshold power value and/or threshold data rate can depend on power values and/or data rates found in previous beamforming processes.

Alternatively or additionally, the communication link can be considered to be established when for a distance above the threshold distance between the transmitters and receivers, a data communication over the communication link has a SNR above a SNR threshold. This allows to ensure that data communication with a selected quality is possible between the transmitters and receivers for at least a certain distance. The threshold SNR can depend on a specific application or usage specific scenario of the MIMO system. The threshold SNR can be based on theoretical calculations and/or on prior beamforming processes. For example, the threshold SNR can depend on SNRs found in previous beamforming processes.

Alternatively or additionally, the communication link can be considered to be established when for a distance above the threshold distance between the transmitters and receivers, a RSSI is above a threshold RSSI. The RSSI can be determined based on a magnitude of an output of the receivers. The threshold RSSI can be based on theoretical calculations and/or on prior beamforming processes. For example, the threshold RSSI can depend on RSSIs found in previous beamforming processes. If the RSSI is above the threshold RSSI the threshold RSSI can be considered as highest RSSI.

The method can use analog beamforming. This allows to reduce the power consumption. Digital precoding or hybrid beamforming can be used for managing inter-stream interference or coupling if necessary.

The method can be used for a first stage RF beamforming or analog beamforming of the Hybrid Beamforming algorithm for mm-wave MIMO systems with sparse MIMO channels as presented in C. Alkhateeb, et al., "Limited feedback hybrid precoding for multi-user millimeterwave systems" in IEEE Transactions on Wireless Communications, vol. 14, no. 11, pp. 6481-6494, Nov. 2015.

In a further aspect of the present invention a RF beamforming module for selecting beams in a MIMO system is presented. The RF beamforming module comprises a database, a beam probability provider, and a beam selector. The database is configured for storing beam data. The beam probability provider is configured for providing for each of the beams a probability for establishing a communication link based on the beam data. The beam selector is configured for selecting first beams and second beams based on their probability for establishing a communication link in an iterative process until a communication link is established between a selected first beam and a selected second beam. The first beams are transmitter beams provided by transmitters or receiver beams provided by receivers. If the first beams are transmitter beams provided by the transmitters, then the second beams are receiver beams provided by the receivers, and if the first beams are receiver beams provided by the receivers, then the second beams are transmitter beams provided by the transmitters. The RF beamforming module allows to reduce the training time of finding a combination of a first beam and a second beam that establish a communication link, e.g., with a given quality and reliability level.

The RF beamforming module can include a beam ranker for providing a beam ranking for each of the beams based on the beam data. This allows for ranking the beams. The beam ranker can be configured to rank the beams whenever new information is available, i.e., the beam ranker can be configured for dynamically ranking the beams.

The beam selector can be configured for selecting first beams and second beams based on their beam ranks for establishing a communication link in an iterative process until a communication link is established between a selected first beam and a selected second beam.

The RF beamforming module can comprise a processor. The beam probability provider, the beam selector, and the beam ranker can be included in the processor. The processor can be configured for performing one or more of the steps of the method of claim 1 or any embodiment of the method.

The RF beamforming module is configured for performing the method according to any of claims 1 to 10.

The RF beamforming module may comprise one or more of a beam reliability calculator, formula calculator, beam grouper, beam split unit, number of levels calculator, or other elements for performing one or more of the steps of the method of any of claims 1 to 10. The elements can be included in the processor. The beam reliability calculator can be configured for calculating a reliability of a beam. The formula calculator can be configured for calculating formulas, e.g., the beam rank formula. The beam grouper can be configured for grouping beams into a grouped beam including two or more beams. The beam split unit can be configured for splitting a grouped beam into two or more beams. The number of levels calculator can be configured for determining an optimal number of levels for a multi-level beam search in order to reduce training time.

In a further aspect of the present invention a RF beamforming system is presented. The RF beamforming system comprises a transmitter device, a receiver device, and the RF beamforming module according to claim 11.

The transmitter device includes multiple transmitters. The receiver device includes multiple receivers. The transmitters and the receivers are configured for providing first beams and second beams. The first beams are transmitter beams provided by the transmitters or receiver beams provided by the receivers. If the first beams are transmitter beams provided by the transmitters, then the second beams are receiver beams provided by the receivers, and if the first beams are receiver beams provided by the receivers, then the second beams are transmitter beams provided by the transmitters. At least one of the transmitter device and the receiver device includes the RF beamforming module.

The RF beamforming system can be a MIMO system. The RF beamforming system preferably is a massive MIMO system with sparse massive MIMO channels. The transmitter device can for example include 100 or more transmitters, e.g., transmitter antenna elements, such as 1000 or more transmitters. The receiver device can for example include 10 or more receivers, e.g. receiver antenna elements, such as 64 or more receivers, e.g., 100 or more receivers. The number of antenna elements at the receiver device is typically lower than at the transmitter device due to the relative limited space of the receiver device, e.g., HMD. A lower number of antenna elements generates broader beams with lower gains. As the MIMO channels are sparse, only a small number of beams establish a communication link. In particular, narrow transmitter beams with high gain are generated by a combination of multiple transmitter signals which are phase-shifted to each other. Narrow receiver beams with high gain are generated by a combination of multiple receiver signals which are phase-shifted to each other. The amplitudes of the signals generated by the transmitters or receivers can also be shifted to each other in order to generate narrow high gain beams. The transmitters and receivers can operate with frequencies in the range of mm-wave between 30 to 300 GHz or with terahertz frequencies between 0.1 THz to 10 THz, such as 240 GHz or 300 GHz.

The RF beamforming system can be configured for performing the method according to any of claims 1 to 10.

Beam data can be stored on the transmitter device and/or the receiver device, e.g., in the database of the RF beamforming module included in the transmitter device and/or the receiver device. The beam data can also be stored on a server, e.g. in the cloud, and can be provided to the transmitter and/or receiver from the server. Preferably, history data is provided to both, the transmitter device and the receiver device. The history data can include user specific history data or kiosk specific history data. The beam data can include the user specific history data and model data which can be based on history data of other users. The model data can also be based on weather factors, electromechanical factors for outdoor backhaul links or the like. The receiver device can for example include the user specific history data. The history data can be statistically analyzed in at least one of the transmitter device and the receiver device in order to determine probabilities of the different beams and to update the beam data. The history data can also be statistically analyzed in order to determine other factors such as beam ranks, reliability, beam quality, or any other parameter included in the beam data. The probability provider can be configured for statistically analyzing the history data included in the beam data in order to provide probabilities for the beams. The beam ranker can be configured for statistically analyzing various parameters of the beam data, such as the probabilities, link quality, SNR, and/or other parameters, in order to provide beam ranks for the beams.

The RF beamforming system can be a master and slave system, in which one of the transmitter device and the receiver device is a master device and the other device is a slave device. A side channel can be used for transmitting at least a part of the beam data between the devices. Preferably, the side channel is used to transmit probabilities, beam ranks, and/or feedback. A time synchronization between the devices can be performed based on a clock included in each of the devices. This allows to obviate the need for a side channel or feedback. Alternatively a side channel or feedback can be provided for synchronization of the transmitter device and the receiver device.

The receiver device can be part of a HMD, e.g. part of a HMD for a VR application or an AR application used in an indoor space. The receiver device can also be part of an outdoor backhaul node.

The users HMD can store user specific data included in the beam data. A kiosk can store and maintain kiosk specific data included in the beam data. The beam data can be uploaded to and downloaded from a server, e.g., in the cloud, based on segmentation for specific user groups or age groups or geographical or demographical distributions or cultural factors or application specific causes.

The system can be configured for performing the method for beams with a data communication range between a few cm and several m for indoor applications. The system can be configured for performing the method for beams with a data communication range up to several hundreds of meters for outdoor backhaul applications.

Orthogonal or unitary RF beamforming codebook can be employed at the transmitter device and/or the receiver device. An orthogonal RF beamforming codebook only adjusts phase shifts but not the amplitude. The codebooks can be discrete Fourier transform (DFT) beamforming codebooks.

In a further aspect of the present invention a computer program for selecting beams in a MIMO system is presented. The computer program product comprises program code means for causing the RF beamforming module according to claim 11 to carry out the method as defined in claim 1, when the computer program product is run on the RF beamforming module. The computer program product can comprise program code means for causing any embodiment of the RF beamforming module to carry out the method as defined in any of claims 1 to 10, when the computer program product is run on the RF beamforming module.

The computer program product can also be configured for assigning beam ranks based on one or more of the probability for establishing a communication link, SNR, MTBF, ease of beamtracking, current beam rank, or any other parameter included in the beam data.

The computer program product can also be run on a server, e.g., in the cloud connected to the RF beamforming module for providing the RF beamforming module with the information for operating the RF beamforming module.

The present invention will be more fully understood from the following detailed description of embodiments thereof, taken together with the drawings in which:

Fig. 1 shows an embodiment of a RF beamforming system including an embodiment of an RF beamforming module;

Fig. 2A shows beams between a transmitter device and a receiver device of a first level of a multi-level beam search;

Fig. 2B shows beams between the transmitter device and the receiver device of a second level of a multi-level beam search;

Fig. 3 shows a first embodiment of a method for selecting beams in a MIMO system based on multi-level beam search that considers rankings based on probabilities for establishing a communication link of beams;

Fig. 4 shows labelled and ranked beams between a transmitter device and a receiver device with different probabilities for establishing a communication link;

Fig. 5 shows a second embodiment of a method for selecting beams in a MIMO system;

Fig. 6 shows a third embodiment of a method for selecting beams in a MIMO system including a hybrid approach of the first embodiment and the second embodiment;

Fig. 7 shows a fourth embodiment of a method for selecting beams in a MIMO system considering beam entropy for deciding which iterative process for selecting the beams has the lowest training time;

Fig. 8 shows a fifth embodiment of a method for selecting beams in a MIMO system including an alternative hybrid approach of the first embodiment and the second embodiment;

Fig. 9 shows a sixth embodiment of a method for selecting beams in a MIMO system considering beam entropy for determining an iterative process for selecting the beams.

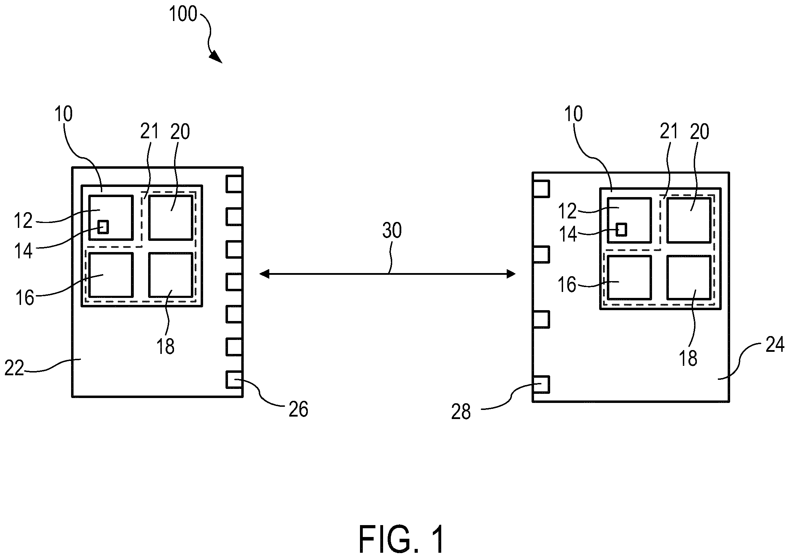

Fig. 1 shows an embodiment of a RF beamforming system 100 comprising an embodiment of an RF beamforming module 10 for selecting beams in a MIMO system. The RF beamforming system 100 can also be used for beam based localization in a room. The RF beamforming system 100 performs analog beamforming in beamspace using methods that select beams based on their probability for establishing a communication link. The probabilities are determined based on user specific history data of the usage of the RF beamforming system 100 and model data included in beam data. The beam data includes statistically analyzed history data generated by operating the RF beamforming system 100. In other embodiments the probability can be determined based on beam data including only user specific history data or model data.

The RF beamforming module 10 includes a computer readable medium 12 with a database 14, a beam probability provider 16, a beam ranker 18, and a beam selector 20. The beam probability provider 16, the beam ranker 18, and the beam selector 20 are included in a processor 21.

In this embodiment the RF beamforming system 100 is a MIMO system with a transmitter device 22 and a receiver device 24. The MIMO channels in the RF beamforming system 100 are sparse. The transmitter device 22 includes multiple transmitters 26 for providing transmitter beams and the receiver device 24 includes multiple receivers for providing receiver beams 28. In this embodiment the transmitter device 22 includes 256 transmitters 26 in form of transmitter antennas and the receiver device includes 128 receivers 28 in form of receiver antennas. Further electric circuitry is omitted for clarity.

Orthogonal or unitary RF beamforming codebooks are employed at the transmitters 26 of the transmitter device 22 and the receivers 28 of the receiver device 24. The beamforming space is divided into beam grids using the orthogonal or unitary beamforming codebooks. In other embodiments other beamforming codebooks can be used. For orthogonal or unitary beamforming codebooks, at the peak or main response axis of one beam, all other beams have their nulls, i.e., they do not receive or transmit any energy in that direction. Orthogonal beamforming allows to minimize inter-beam spatial correlation or coupling or inter-beam leakage among different beams. A uniform linear array (ULA) of N transmitters or N receivers allows to form N transmitter beams or N receiver beams. This embodiment uses an ULA. Other embodiments can for example have two-dimensional arrays of transmitters and/or receivers. Beamforming weights are implemented using digitally-controlled, constant-modulus analog phase-shifters in order to generate beams (not shown). The phase-shifters are controlled by the processor 21. In this embodiment, each of the transmitter device 22 and the receiver device 24 includes a beamforming module 10.

A communication link 30 can be established between a transmitter beam and a receiver beam. The communication link 30 is considered to be established, when for a distance above a threshold distance between the transmitter device 22 and the receiver device 24 a RSSI determined based on a magnitude of an output of the receiver device 24 is above a threshold RSSI.. In other embodiments alternatively or additionally the communication link can be considered to be established if a received power value is above a threshold power value, if a received data rate is above a threshold data rate, or if a SNR value is above a SNR threshold value.

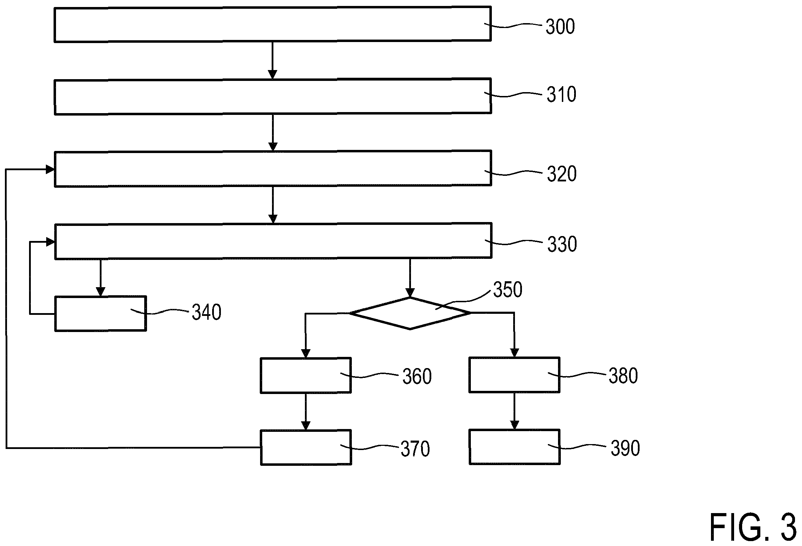

The computer readable medium 12 includes the database 14 and stores a computer program product for selecting beams in MIMO systems. The computer program product comprises program code means for causing the RF beamforming module 10 to carry out a method for selecting beams in MIMO systems, e.g., as disclosed in Fig. 3, 5, 6, and 7, when the computer program product is run on the RF beamforming module 10.

The database 14 stores the beam data. The beam data includes statistically analyzed history data generated by operating the RF beamforming system 100. The statistically analyzed history data includes user specific history data generated by using one of the methods by a user. The user specific history data includes the information for which percentage of time a user used which beams. This allows to determine a probability of the respective beams.

In this embodiment that corresponds to the claimed invention, the beam data additionally includes model data generated based on model assumptions for the RF beamforming system 100. The model data includes statistically analyzed history data of other users that used the RF beamforming system 100. In particular, the model assumptions are derived by statistically analyzing the history data of the other users that used the RF beamforming system 100. The history data includes a number of established communication links for each of the beams. In other embodiments the history data can include sensor data such as sensor data generated by a gyroscope or an inertial sensor. According to the model assumptions, a center transmitter beam has a highest probability for establishing a connection and the probability for establishing a communication link becomes lower the farther away beams are from the center beam. The model assumption includes the knowledge that the LoS has the highest probability along the center beam.

A probability for establishing a communication link for a beam determined based on the user specific history and a probability for establishing a communication link for a beam determined based on the model data are combined into a probability for establishing a communication link for a beam based on the beam data as weighted sum. In this embodiment, the weights depend on the amount and actuality of user specific history data and model data.

The beam probability provider 16 provides for each of the beams of the RF beamforming system 100 a probability for establishing a communication link based on the beam data. The beam probability provider 16 receives the beam data from the database 14 and calculates the probability for each of the beams and labels the beams with their probability.

The beam ranker 18 ranks each of the beams based on the beam data. The beam ranker 18 is optional. In this embodiment the ranking is performed based on the probability for establishing a communication link. Hence, higher probability results in a higher rank. A separate beam ranking is generated for the transmitter beams and the receiver beams, i.e., a transmitter beam ranking and a receiver beam ranking. The beam ranker 18 can also rank the beams based on further parameters such as current beam rank, link quality, SNR, link reliability, overall throughput, easiness of beam tracking, or any other parameter included in the beam data. The beam ranker 18 can therefore calculate a dynamically updated beam rank formula including the parameters included in the beam data.

The beam selector 20 selects transmitter beams and receiver beams based on their beam ranks for establishing a communication link in an iterative process until a communication link is established between a selected transmitter beam and a selected receiver beam. In other embodiments the selection of the beams can be based on their probability for establishing a communication link.

Various methods can be performed by the RF beamforming module 10 for selecting beams in a MIMO system. Embodiments of the methods are disclosed in Figs. 3 and 5 to 9. In general, the method provides for each of the beams a probability for establishing a communication link based on beam data including statistically analyzed history data generated by operating the system 100 and selects first beams and second beams based on their probability for establishing a communication link in an iterative process until a communication link is established between a selected first beam and a selected second beam. In this embodiment the first beams are the transmitter beams and the second beams are the receiver beams. In other embodiments the first beams can be the receiver beams and the second beams can be the transmitter beams. The first beams preferably are the beams with the lower beam entropy and the second beams preferably are the beams with the higher beam entropy.

Other embodiments of the RF beamforming module can comprise further elements, such as one or more of a beam reliability calculator, a formula calculator, a beam grouper, a beam split unit, and a number of levels calculator. These further elements can be included in the processor 21. The beam reliability calculator can calculate a reliability of a beam. The formula calculator can calculate formulas, e.g., the beam rank formula. The formula calculator can be a part of the beam ranker 18. The beam grouper can group beams into a grouped beam including two or more beams. The beam split unit can split a grouped beam into two or more beams. The number of levels calculator can be configured for determining an optimal number of levels for a multi-level beam search in order to reduce training time. Alternatively the functions of these or other further elements can be performed by the processor 21. The processor 21 can for example perform the steps of the methods disclosed in Figs. 3 and 5 to 9.

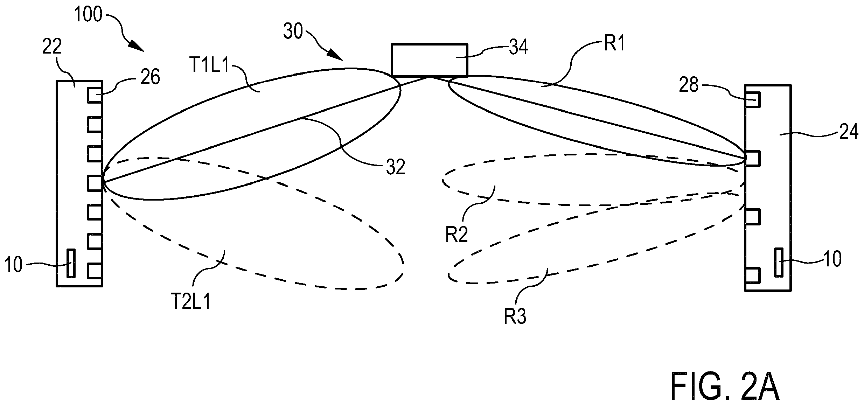

Fig. 2A shows transmitter beams T1L1 and T2L1 of a first level of a multi-level beam search and receiver beams R1, R2, and R3 between the transmitter device 22 and the receiver device 24 of the RF beamforming system 100. A beam path 32 extends from the transmitter device 22, is scattered at scatterer 34, and extends to the receiver device 24. The transmitter beams T1L1 and T2L1 are grouped beams which each include two beams. The T stands for transmitter beam, the number behind the T for the beam number, the L stands for level and the number for the level of the beam. The R stands for receiver beam and the number behind the R for the beam number. In the first level a smaller number of transmitters is activated for beamforming resulting in a broader beam with lower gains. In higher levels a larger number of transmitters is activated for beamforming resulting in narrower beams with higher gains. In order to generate most narrow beams with highest gains, all transmitters are activated.

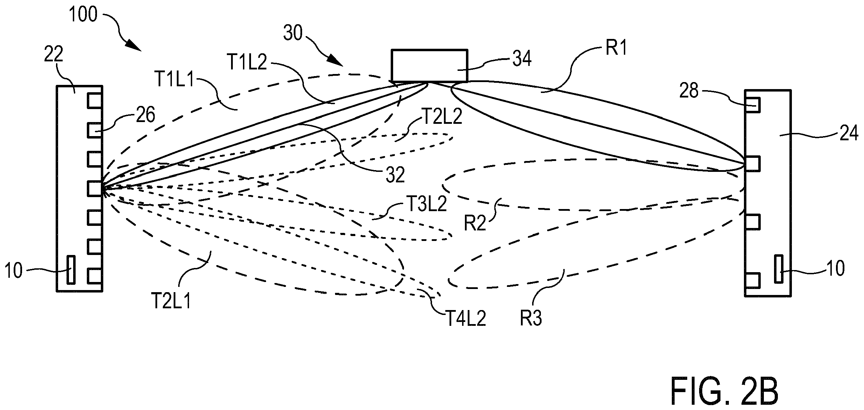

Fig. 2B additionally shows transmitter beams T1L2, T2L2, T3L2, and T4L2 of a second level of the multi-level beam search and receiver beams R1, R2, and R3. The transmitter beams T1L2 and T2L2 were split from the grouped beam T1L1 and the transmitter beams T3L2 and T4L2 were split from the grouped beam T2L1. In the multi-level beam search only the transmitter beams split from the grouped beam which established a communication link are further considered on the next level of the multi-level beam search. The multi-level beam search in this embodiment has two levels. In other embodiments the multi-level beam search can have another number of levels, e.g., 3, 4, or more levels. The number of levels can depend on the number of transmitters and receivers. The number of levels can alternatively or additionally depend on the probabilities for establishing a communication link.

Fig. 3 shows a first embodiment of a method for selecting beams in a MIMO system, e.g., the RF beamforming system 100 shown in Fig. 1, based on multi-level beam search that considers probabilities for establishing a communication link of beams. The iterative process of selecting first beams and second beams based on their probability for establishing a communication link until a communication link is established between a selected first beam and a selected second beam is performed by using multi-level beam search for determining a first beam and a second beam that establish a communication link based on the probabilities for establishing a communication link of the beams in the first embodiment of the method. The first beams are transmitter beams provided by the transmitters and the second beams are receiver beams provided by the receivers. In other embodiments the first beams can be receiver beams and the second beams can be transmitter beams. Preferably, the first beams are the beams with lower beam entropy and the second beams are the beams with the higher beam entropy.

In step 300, a probability for establishing a communication link based on beam data is provided for each of the beams.

In step 310, beams are grouped into one or more grouped beams. Each grouped beam includes two or more beams. The probability for establishing a communication link of a grouped beam corresponds to the sum of the probabilities of the beams included in the grouped beam. In this embodiment only transmitter beams are grouped. In other embodiments receiver beams can alternatively or additionally be grouped into grouped beams. The beams are grouped such that the beam entropies are as low as possible.

In the following steps transmitter beams and receiver beams are selected in an iterative process based on their probability for establishing a communication link.

In step 320, a transmitter beam and a receiver beam are selected based on their probability for establishing a communication link. In this embodiment the transmitter beam with the highest probability and the receiver beam with the highest probability are selected. In other embodiments the beams can be selected based on a beam ranking provided to the beams based on the beam data, e.g., the highest ranked beams can be selected.

In step 330, it is tested whether a communication link is established between the selected transmitter beam and the selected receiver beam.

If no communication link is established, the method performs step 340. If a communication link is established the method determines in step 350 whether the communication link includes a grouped beam. If the communication link includes a grouped beam, the method performs steps 360 and 370. If a communication link is established that does not include a grouped beam, step 380 and 390 are performed.

In step 340, another transmitter beam or another receiver beam are selected based on their probability for establishing a communication link. In this embodiment all grouped transmitter beams are first tested against the receiver beam with the highest probability for establishing a communication link. Therefore, the respective grouped transmitter beam with the next highest probability is selected. After all transmitter beams have been tested against the receiver beam with the highest probability for establishing a communication link, the receiver beam with the next highest probability is selected and tested against all transmitter beams and so on. In other embodiments the method can comprise a step of selecting another first beam and/or another second beam based on their probability for establishing a communication link. The beam selection can also be performed based on beam ranks in other embodiments. After performing step 340, step 330 is repeated with the newly selected beams.

In step 360, the grouped beam is split into two or more beams. Only the grouped beam for which the communication link was established is split. This allows to limit the further search to the beams split from the grouped beams and thus reduces training time. Depending on the number of levels of the multi-level beam search, the beams split from the grouped beam are again grouped beams including two or more beams, i.e., when the multi-level beam search has more than 2 levels. On the lowest level of the multi-level beam search, the beams split from the grouped beams are no grouped beams. For example in case of two levels, the grouped beam splits into individual beams from level 1 to level 2 as shown in Fig. 2B that shows beams of level 2 compared to Fig. 2A which shows beams of level 1. In Fig. 2B, level 2 is the lowest level of the multi-level beam search. In other embodiments only the receiver beam that established the communication link may be further considered for the beamforming operation.

In step 370 for each of the beams split from the grouped beam an updated probability for establishing a communication link based on the beam data and the knowledge that the grouped beam established a communication link is provided. As a communication link was established, the probability for establishing a communication link is 100 % for the beams that established the communication link and therefore also for the grouped beam. This probability can be taken into account for determining the updated probability for establishing a communication link for the beams split from the grouped beam by multiplying it to their probability and dividing it by the cumulative probability of the grouped beam, i.e., $p_j^u = \frac{1}{\Sigma_i p_i} p_j$ , with $p_j^u$ the updated probability of beam j, $\Sigma_i p_i$ the cumulative probability of the beams included in the grouped beam, and $p_j$ the probability of beam j. Furthermore, in this embodiment an updated probability is provided to the selected receiver beam that established the communication link. In other embodiments, the beam data can also be updated accordingly for the selected receiver beam.

In step 380 the beam data is updated accordingly. This includes increasing the probabilities of the selected transmitter beam and the selected receiver beam. In this embodiment, the history data included in the beam data is updated by increasing the number of established communication links for the respective transmitter beam and the respective receiver beam for which the communication link is established. This changes the probabilities for the respective transmitter and receiver beams, which are also updated.

In step 390 a communication link is established between the selected transmitter beam and the selected receiver beam for communicating data between the transmitter device and the receiver device.

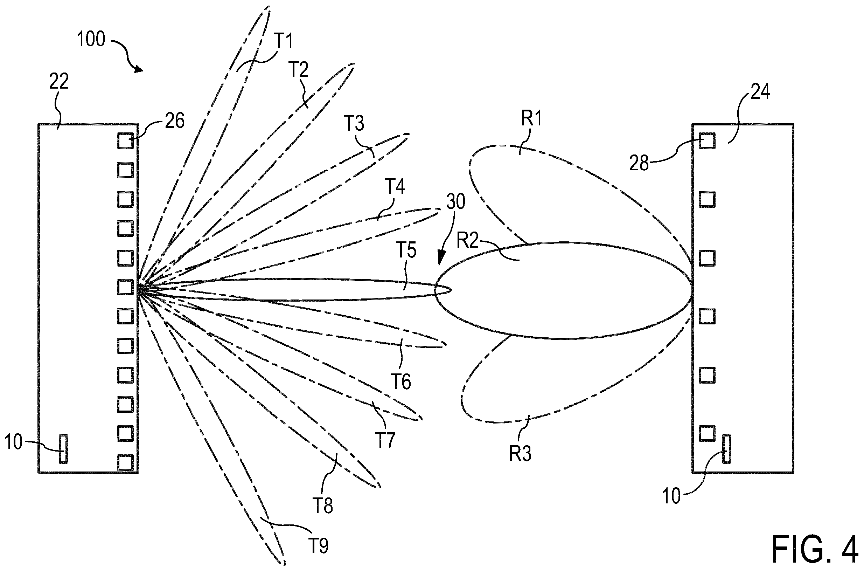

Fig. 4 shows beams between a transmitter device 22 and a receiver device 24 with different probability for establishing a communication link 30 used in a VR application in an indoor space, e.g., a room. The probabilities for establishing a communication link 30 are based on beam data and are presented in Table 1 with values between 0 and 1 for the transmitter beams T1 to T9 and in Table 2 for the receiver beams R1 to R3. In this embodiment the beams are ranked based on their probability for establishing a communication link. The beam at the center T5 and R2, and close to the center, i.e., T4 and T6 have the highest probabilities for establishing a communication link as users are more likely to be in the central zone of a room than in extremeties on average. This includes the assumption that the users are likely to begin from a center of the room. The users are free to rotate, such that the probabilities of the transmitter beams is independent of the probabilities of the receiver beams.

In the case of Fig. 4, only few beams have a high probability for establishing a communication link and these beams are the center beams. Hence the beam entropy is relatively low. The beam entropy of the transmitter beams is 0.59. The beam entropy of the receiver beam is 0.30. In other cases more evenly distributed probabilities are possible and the beam entropy can be different, e.g., higher or lower.

Table 1:

| Beam | Probability for establishing a communication link | Rank |
|------|---------------------------------------------------|------|
| T1   | 0.012                                             | 7    |
| T2   | 0.02                                              | 6    |
| T3   | 0.05                                              | 4    |
| T4   | 0.19                                              | 2    |
| T5   | 0.57                                              | 1    |

(continued)

| Beam | Probability for establishing a communication link | Rank |
|------|---------------------------------------------------|------|
| T6 | 0.1 | 3 |
| T7 | 0.04 | 5 |
| T8 | 0.01 | 8 |
| T9 | 0.008 | 9 |

Table 2:

| Beam | Probability for establishing a communication link | Rank |
|------|---------------------------------------------------|------|
| R1 | 0.2 | 2 |
| R2 | 0.75 | 1 |
| R3 | 0.05 | 3 |

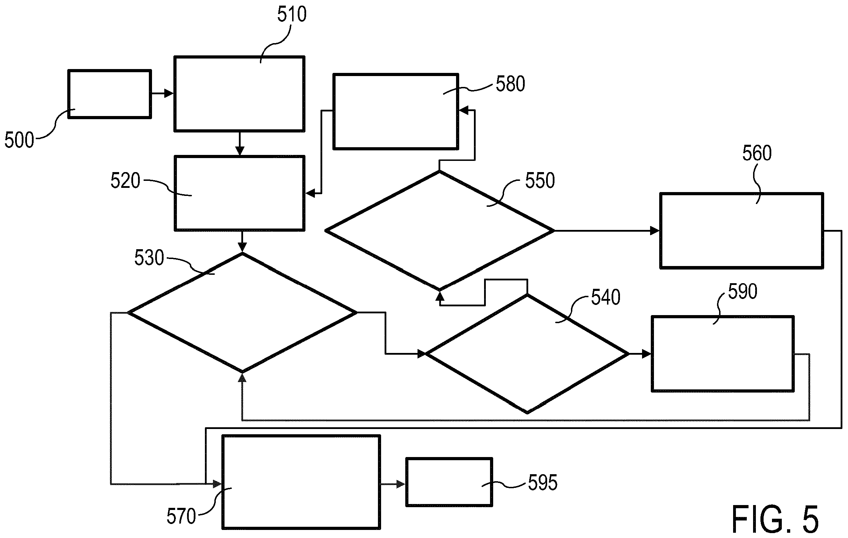

Fig. 5 shows a second embodiment of a method for selecting beams in a MIMO system, such as in the RF beamforming system 100 of Fig. 1. The second embodiment is a statistical beam rank based beam search method.

In step 500, a probability for establishing a communication link and a beam ranking is provided for the beams based on the beam data. Furthermore, the transmitter beam entropy of the transmitter beams and the receiver beam entropy of the receiver beams is determined. The transmitter beam entropy and the receiver beam entropy can be stored in the beam data. Alternatively, the transmitter beam entropy and the receiver beam entropy can be derived from the beam data in case they are stored in the beam data.

In step 510, the highest ranked beam of the beams with lower beam entropy is selected. This allows to achieve higher success probabilities in first few initial tests. In this embodiment the highest ranked receiver beam is selected for the beams of Table 1 and 2 as the receiver beam entropy is lower than the transmitter beam entropy. In other embodiments, the highest ranked transmitter beam can be selected. In other embodiments the highest ranked beam of any of the beams can be selected without considering beam entropy of the beams, i.e., the selection of the highest ranked beam can be independent of the beam entropy in other embodiments.

In step 520, the highest ranked beam of the beams with higher beam entropy is selected. In this embodiment the highest ranked transmitter beam is selected. In other embodiments, the highest ranked receiver beam can be selected. In other embodiments the highest ranked beam of any of the beams can be selected without considering beam entropy of the beams, as long as one receiver beam and one transmitter beam is selected in Steps 510 and 520.

In step 530, it is tested whether the selected transmitter beam and the selected receiver beam establish a communication link. If a communication link establishes, the method performs steps 570 and 595. If no communication link establishes, step 540 is performed.

In step 540 it is determined whether a cumulative probability of tested transmitter beams is equal to or above a threshold probability. The threshold probability in this embodiment is 0.75. The threshold probability is selected such that the beamforming has statistically minimum overheads for a given PMF, i.e., on an average the successful beam selection takes a minimum number of tests. In other embodiments, the threshold probability to be compared to the cumulative probability of tested transmitter beams is at least 75 % of a maximum probability. The threshold probability can also for example be 50 %, 60 %, 70 %, 80 %, 85 %, or 90 % of a maximum probability. In other embodiments in step 540, it can be determined whether a cumulative probability of tested receiver beams is equal to or above the threshold probability. If the cumulative probability of tested transmitter beams is equal to or above the threshold probability, step 550 is performed. If the cumulative probability of tested transmitter beams is below the threshold probability, step 590 is performed.

In step 550, it is determined whether a cumulative probability of tested receiver beams is equal to or above a threshold probability. The threshold probability in this embodiment is 0.75. The threshold probability is selected such that the beamforming has statistically minimum overheads for a given PMF, i.e., on an average the successful beam selection takes a minimum number of tests. In other embodiments, the threshold probability to be compared to the cumulative probability of tested receiver beams is at least 75 % of a maximum probability. The threshold probability can also for example be 50 %, 60 %, 70 %, 80 %, 85 %, or 90 %. In other embodiments in step 550, it can be determined whether a cumulative probability of tested transmitter beams is equal to or above the threshold probability. If the cumulative probability of tested receiver beams is equal to or above the threshold probability, step 560 is performed. If the cumulative probability of tested receiver beams is below the threshold probability, step 580 is performed.

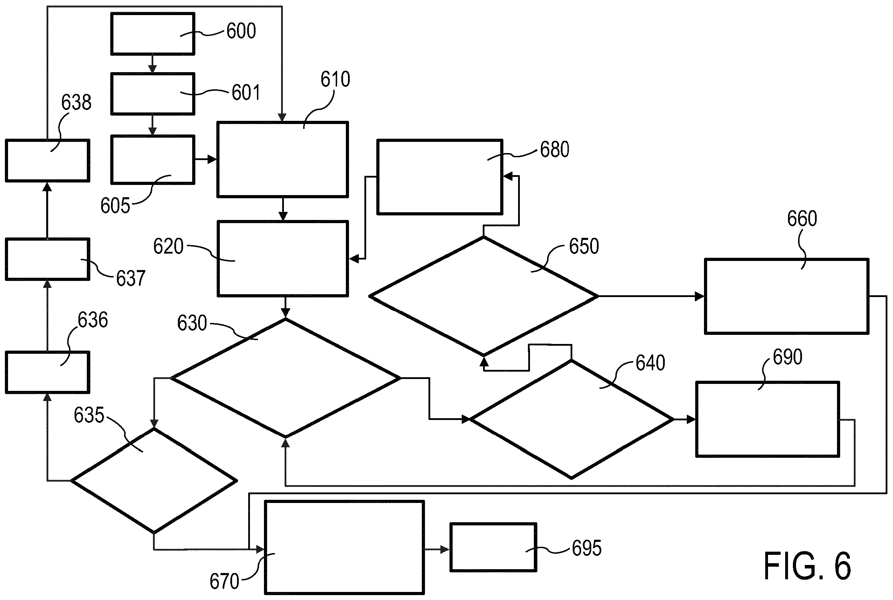

In step 560, multi-level beam search is performed for determining a transmitter beam and a receiver beam that establish a communication link. The multi-level beam search in this embodiment is performed as presented in S. Hur et al. in "Multilevel millimeter wave beamforming for wireless backhaul", published in IEEE GLOBECOM Workshops, pages 253-257 in December 2011. In other embodiments, multi-level beam search can also be performed by taking into account the probability for establishing a communication link of the beams, i.e., the multi-level beam search can be performed according to the first embodiment of the method as presented in Fig. 3 or according to the method as presented in Fig. 6. When a transmitter beam and a receiver beam that establish a communication link are found, steps 570 and 595 are performed.

In step 570, the beam data is updated accordingly. This includes increasing the probabilities of the selected transmitter beam and the selected receiver beam. In this embodiment, the history data included in the beam data is updated by increasing the number of established communication links for the respective transmitter beam and the respective receiver beam for which the communication link is established. This changes the probabilities for the respective transmitter and receiver beams, which are also updated.

In step 580, a next ranked receiver beam is selected and step 520 is performed after step 580, i.e., a highest ranked transmitter beam is selected. Then step 530 is repeated by testing whether the selected transmitter beam and selected receiver beam establish a communication link. The method runs through the following steps until a communication link is established between a selected transmitter beam and a selected receiver beam.

In step 590, a next ranked transmitter beam is selected and step 530 is repeated by testing whether the selected transmitter beam and the selected receiver beam establish a communication link. The method runs through the following steps until a communication link is established between a selected transmitter beam and a selected receiver beam.

In step 595 a communication link is established between the selected transmitter beam and the selected receiver beam for communicating data between the transmitter device and the receiver device.

Success probabilities in dependence of the number of tests performed for the second embodiment of the method are presented in Table 3, i.e., for example testing of the first two beam combinations has a probability of 57 % (0.57 · 0.75 + 0.19 · 0.75 = 0.57) for establishing a communication link. If the communication link is not established within the two tests, step 560 is performed for this case, as the cumulative probability of tested receiver beams is equal to the threshold probability and the cumulative probability of tested transmitter beams is above the threshold probability.

Table 3:

| Test number | Success probability |
|---|---|
| 1 | 0.43 |
| 2 | 0.57 |

A comparison of the performance of exhaustive beam search, multi-level beam search performed in the prior art, and the method according to the second embodiment are presented in Table 4. Over the lifetime of the MIMO system, the MIMO system will perform X beamforming operations. For the example of 9 transmitter beams and 3 receiver beams, an exhaustive beam search performs 27 (9 · 3 = 27) tests, the prior art multi-level beam search performs 12 (3 · 3 + 3 · 1 = 12) tests for two levels in which three beams are grouped in the first level, and the second embodiment is successful in two tests in 57 % of the beamforming operations and performs multi-level beam search for the remaining 43 % of the beamforming operations resulting in an average number of 6.3 tests (0.57 · 2 + 0.43 · 12 =). Each beam combination is only tested once.

Table 4:

| Method | Performance |
|---|---|
| Exhaustive beam search | 27*X |
| Prior art multi-level beam search | 12*X |
| Second embodiment of the method (Fig. 5) | 6.3*X |

Hence, the second embodiment of the method allows to reduce the number of tests for finding a beam combination that establishes a communication link over the prior art and thus reduces training time.

In Fig. 6 a third embodiment of the method for selecting beams in a MIMO system, such as in the RF beamforming system 100 of Fig. 1, in form of a hybrid approach of the first embodiment, i.e., multi-level beam search and the second embodiment is presented. The iterative process of selecting first beams and second beams based on their probability for establishing a communication link until a communication link is established between a selected first beam and a selected second beam includes the steps 600 to 695. Step 610 corresponds to step 510, step 620 corresponds to step 520, step 630 corresponds to step 530, step 640 corresponds to step 540, step 650 corresponds to step 550, step 660 corresponds to step 560, step 670 corresponds to step 570, step 680 corresponds to step 580, step 690 corresponds to step 590, i.e., what has been said for the steps of the second embodiment equivalently applies to the corresponding steps of the third embodiment. The third embodiment, however, includes a step of grouping beams.

Namely, in step 600, a probability for establishing a communication link based on beam data is provided for each of the beams.

In step 601, beams are grouped into one or more grouped beams. Each grouped beam includes two or more beams. The probability for establishing a communication link of a grouped beam corresponds to the sum of the probabilities of the beams included in the grouped beam. The beams are grouped such that the beam entropies are as low as possible. In this embodiment only transmitter beams are grouped. In other embodiments receiver beams can alternatively or additionally be grouped into grouped beams. In this case the actions performed for and on the grouped transmitter beams and receiver beams can be interchanged. Furthermore in this embodiment the transmitter beam entropy of the transmitter beams and the receiver beam entropy of the receiver beams is determined. The transmitter beam entropy and the receiver beam entropy can be stored in the beam data. Alternatively, the transmitter beam entropy and the receiver beam entropy can be derived from the beam data in case they are stored in the beam data. In other embodiments, step 601 can include grouping of the beams only when the higher beam entropy is equal to or above a threshold beam entropy. Hence, for that embodiment, in case that the higher beam entropy is below the threshold beam entropy, no grouping is performed in step 601 and the steps performed are essentially the ones of the second embodiment of the method. This allows to select the method that reduces training time based on beam entropy. In other embodiments the beams of the beam with the higher beam entropy can be grouped. The beams can be grouped such that the beam entropies are as low as possible.

In step 605, a beam ranking for the beams based on the beam data is provided.

In step 610, the highest ranked receiver beam is selected as the receiver beam entropy of 0.30 of the receiver beams of Table 2 is lower than the grouped transmitter beam entropy of 0.45 of the grouped transmitter beams of Table 6 which are used in this case.

In step 620, the highest ranked transmitter beam is selected.

In step 630, it is tested whether the selected transmitter beam and the selected receiver beam establish a communication link. If a communication link establishes, step 635 is performed. If no communication link establishes, step 640 is performed.

In step 635 it is determined, whether the communication link includes a grouped beam. If the communication link includes a grouped beam, steps 636, 637, and 638 are performed and then steps 610 and the following steps are repeated. If the communication link does not include a grouped beam, the method performs steps 670 and 695.

In step 636, the grouped beam is split into two or more beams.

In step 637, for each of the beams split from the grouped beam an updated probability for establishing a communication link based on the beam data and the knowledge that the grouped beam established a communication link is provided. In this embodiment, also an updated probability is provided for the selected receiver beam that established the communication link with the grouped transmitter beam. Furthermore the beam data is updated accordingly for the receiver beam.

In step 638, a beam ranking is provided for the beams based on the beam data and the updated probability for establishing a communication link. In other embodiments the beam ranking can be provided only for beams that established the communication link. Then step 610 and the following steps are repeated.

In step 640, it is determined whether a cumulative probability of tested transmitter beams is equal to or above a threshold probability. If the cumulative probability of tested transmitter beams is equal to or above the threshold probability, step 650 is performed. If the cumulative probability of tested transmitter beams is below the threshold probability, step 690 is performed.

In step 650, it is determined whether a cumulative probability of tested receiver beams is equal to or above a threshold probability. If the cumulative probability of tested receiver beams is equal to or above the threshold probability, step 660 is performed. If the cumulative probability of tested receiver beams is below the threshold probability, step 680 is performed.

In step 660, multi-level beam search is performed for determining a transmitter beam and a receiver beam that establish a communication link. The multi-level beam search in this embodiment is performed according to the first embodiment of the method as presented in Fig. 3. In other embodiments, a multi-level beam search can also be performed according to the method as presented in Fig. 6 or as presented in S. Hur et al. in "Multilevel millimeter wave beamforming for wireless backhaul", published in IEEE GLOBECOM Workshops, pages 253-257 in December 2011. When a transmitter beam and a receiver beam that establish a communication link are found, steps 670 and 695 are performed.

In step 670, the beam data is updated accordingly.

In step 680, a next ranked receiver beam is selected and step 620 is performed after step 680, i.e., a highest ranked transmitter beam is selected. Then step 630 is repeated by testing whether the selected transmitter beam and selected receiver beam establish a communication link. The method runs through the following steps until a communication link is established between a selected transmitter beam and a selected receiver beam that does not include a grouped beam.

In step 690, a next ranked transmitter beam is selected and step 630 is repeated by testing whether the selected transmitter beam and the selected receiver beam establish a communication link. The method runs through the following steps until a communication link is established between a selected transmitter beam and a selected receiver beam that does not include a grouped beam.

In step 695 a communication link is established between the selected transmitter beam and the selected receiver beam for communicating data between the transmitter device and the receiver device.

In Table 5, probabilities for establishing a communication link and beam rankings based on beam data are presented for the transmitter beams T1 to T9. The receiver beams R1, R2, R3 correspond to the ones of Table 2.

Table 5:

| Beam | Probability for establishing a communication link | Rank |
|------|---------------------------------------------------|------|
| T1 | 0.13 | 4 |
| T2 | 0.072 | 7 |
| T3 | 0.05 | 8 |
| T4 | 0.12 | 5 |
| T5 | 0.25 | 1 |
| T6 | 0.14 | 3 |
| T7 | 0.08 | 6 |
| T8 | 0.15 | 2 |
| T9 | 0.008 | 9 |

The beam entropy of the transmitter beams of Table 5 is 0.87. Hence the beam entropy is higher than for the transmitter beams in Table 1. For this PMF, for example three grouped beams T1L1, T2L1, and T3L1 can be generated by grouping T1, T2, and T3 into T1L1, grouping T4, T5, and T6 into T2L1, and grouping T7, T8, and T9 into T3L1 as presented in Table 6.

Table 6:

| Beam | Probability for establishing a communication link | Rank |
|------|---------------------------------------------------|------|
| T1L1 | 0.252 | 2 |
| T2L1 | 0.510 | 1 |
| T3L1 | 0.238 | 3 |

The beam entropy of the grouped beams in Table 6 is 0.45, i.e., lower than for the beams in Table 5. Reducing the beam entropy enables a faster beam training.

The PMF is concentrated in T2L1. Even though without grouping, T8 would normally be tested after T1, with grouping, T4 and T5 can be tested before T8 and T1 if T2L1 establishes a communication link.

Two levels are considered in this embodiment, such that the grouped beams of Table 6 split into the beams presented in Tables 7, 8, and 9.

Table 7:

| Beam | Probability for establishing a communication link | Rank |
|------|---------------------------------------------------|------|
| T1L2 | 0.516 | 1 |
| T2L2 | 0.283 | 2 |
| T3L2 | 0.201 | 3 |

Table 8:

| Beam | Probability for establishing a communication link | Rank |
|------|---------------------------------------------------|------|
| T4L2 | 0.235 | 3 |
| T5L2 | 0.490 | 1 |
| T6L2 | 0.275 | 2 |

Table 9:

| Beam | Probability for establishing a communication link | Rank |
|------|---------------------------------------------------|------|
| T7L2 | 0.34 | 2 |
| T8L2 | 0.63 | 1 |
| T9L2 | 0.03 | 3 |

The probabilities presented in Tables 7, 8, and 9 correspond to the case in which the respective grouped beam established a communication link. Therefore for example updated probabilities are generated for the beams on the second level, i.e., T4L2, T5L2, T6L2 of the grouped beam T2L1 and a new beam ranking is provided as presented in Table 8 when grouped beam T2L1 establishes the communication link. The updated probabilities are calculated using the knowledge that the communication link was established with the grouped beam. In particular, the probability of 100 % for establishing a communication link of the grouped beam is multiplied by the previous probability of each of the beams T4, T5, T6, and divided by the cumulative probability of the grouped beam, i.e., $p_j^u = \frac{1}{\sum_i p_i} p_j = \frac{1}{0.51} p_j$. Only the beams split from the grouped beam are considered on the second level of the multi-level beam search.

The third embodiment of the method in contrast to the second embodiment allows to find the beam combination that establishes a communication link with less tests for the beams of Table 5. In 51 % of the beamforming operations, a beam combination that establishes a communication link can be found in a maximum of 4 tests. The success rate is high as the probability is unevenly distributed and high for the center beams. The success probability is 0 for the first L-1 tests with L, the number of levels in the hybrid approach, i.e., in this example L is 2.

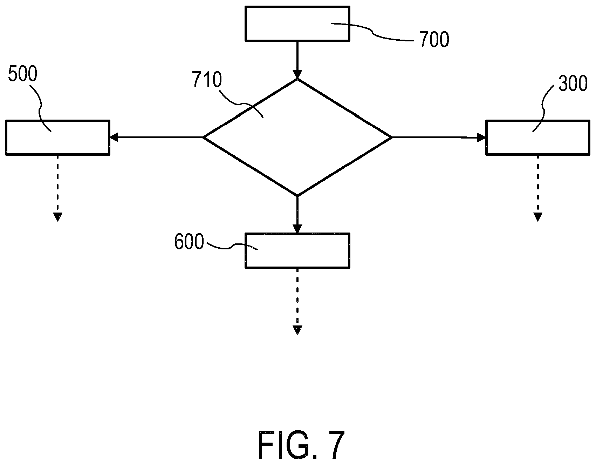

In Fig. 7 a fourth embodiment of the method for selecting beams in a MIMO system, such as the RF beamforming system 100 presented in Fig. 1 is shown.

In step 700, a beam entropy is determined for the beams of the MIMO system. The beam entropy of the MIMO system depends on a level of randomness of the probability distribution for establishing a communication link. In this embodiment the beam entropy is determined by calculating

$$Beam\ Entropy = -\sum_{i=1}^{N} p_i \log p_i,$$

where $p_i$ is the probability of beam i for establishing a communication link and N is the number of transmitter beams or receiver beams. The transmitter beam entropy and the receiver beam entropy are determined. In this embodiment the beam entropy corresponds to the higher one of transmitter beam entropy and receiver beam entropy. In other embodiments the beam entropy can also be a weighted sum of the transmitter beam entropy and the receiver beam entropy.

In step 710, the beam entropy is compared to a first threshold beam entropy and a second threshold beam entropy. If the beam entropy is above the first threshold beam entropy, step 300 and its following steps are performed, i.e., the first embodiment of the method is performed. If the beam entropy is below or equal to the first threshold beam entropy and above a second threshold beam entropy, step 600 and its following steps are performed, i.e., the third embodiment of the method is performed. If the beam entropy is below or equal to the second threshold beam entropy, step 500 and its following steps are performed, i.e., the second embodiment of the method is performed. The first threshold beam entropy in this embodiment is 75 % of a maximum value of beam entropy. The second threshold beam entropy is 25 % of the maximum value of the beam entropy. Hence in this embodiment, the steps of the first embodiment of the method are performed for a beam entropy above 75 %, the steps of the third embodiment are performed for a beam entropy above 25 % and up to 75 %, and the steps of the second embodiment are performed for a beam entropy equal to or below 25 %. In other embodiments the second threshold beam entropy can also have a value between 20 % and 70 % of a maximum value of the beam entropy and the first threshold beam entropy can have a value between 50 % and 90 %. The first threshold beam entropy is larger than the second threshold beam entropy in any case. The threshold beam entropies can depend on the PMF, a number of beams, or other parameters included in the beam data.

In other embodiments the first threshold beam entropy and the second threshold beam entropy can be adjusted based on beam data. Therefore, an adjustable scale can be provided fortuning the first threshold beam entropy and/or the second threshold beam entropy.

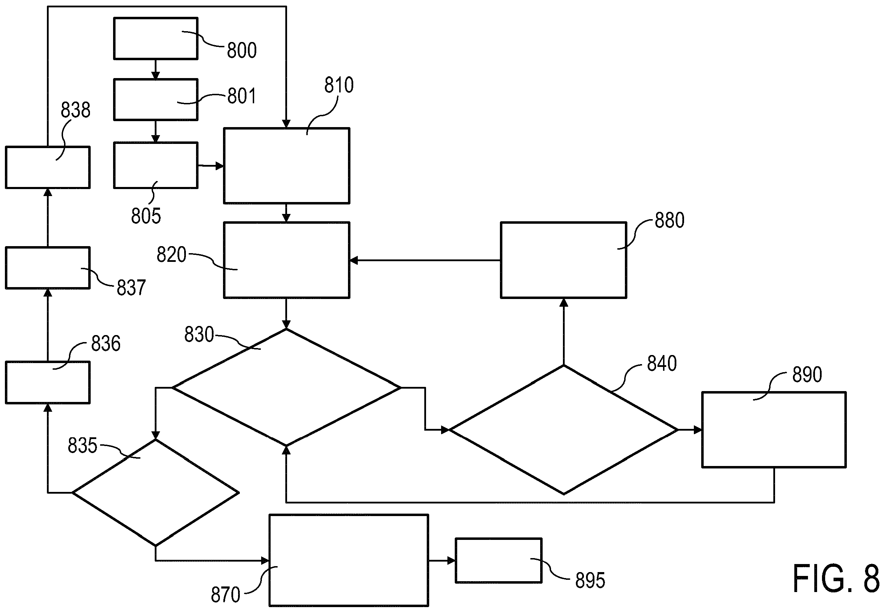

In Fig. 8 a fifth embodiment of the method for selecting beams in a MIMO system, such as in the RF beamforming system 100 of Fig. 1, in form of another hybrid approach of the first embodiment, i.e., multi-level beam search and the second embodiment is presented. The iterative process of selecting first beams and second beams based on their probability for establishing a communication link until a communication link is established between a selected first beam and a selected second beam includes the steps 800 to 895. Step 800 corresponds to step 600, step 801 corresponds to step 601, step 805 corresponds to step 605, step 810 corresponds to step 610, step 820 corresponds to step 620, step 830 corresponds to step 630, step 835 corresponds to step 635, step 836 corresponds to step 636, step 837 corresponds to step 637, step 838 corresponds to step 638, step 870 corresponds to step 670, step 880 corresponds to step 680, step 890 corresponds to step 690, and step 895 corresponds to step 695, i.e., what has been said for the steps of the third embodiment equivalently applies to the corresponding steps of the fifth embodiment.

In step 800, a probability for establishing a communication link based on beam data is provided for each of the beams.

In step 801, beams are grouped into one or more grouped beams. Each grouped beam includes two or more beams. In this embodiment only transmitter beams are grouped. In other embodiments receiver beams can be grouped. In this case the actions performed for and on transmitter beams and receiver beams can be interchanged.

In step 805, a beam ranking for the beams based on the beam data is provided.

In step 810, the highest ranked receiver beam is selected.

In step 820, the highest ranked transmitter beam is selected.

In step 830, it is tested whether the selected transmitter beam and the selected receiver beam establish a communication link. If a communication link establishes, step 835 is performed. If no communication link establishes, step 840 is performed.

In step 835 it is determined, whether the communication link includes a grouped beam. If the communication link includes a grouped beam, steps 836, 837, and 838 are performed and then steps 810 and the following steps are repeated. If the communication link does not include a grouped beam, the method performs steps 870 and 895.

In step 836, the grouped beam is split into two or more beams.

In step 837, for each of the beams split from the grouped beam an updated probability for establishing a communication link based on the beam data and the knowledge that the grouped beam established a communication link is provided. In this embodiment, also an updated probability is provided for the selected receiver beam that established the communication link with the grouped transmitter beam. Furthermore the beam data is updated accordingly for the receiver beam.

In step 838, a beam ranking is provided for the beams based on the beam data and the updated probability for establishing a communication link. Then step 810 and the following steps are repeated.

In step 840, it is determined whether a cumulative probability of tested transmitter beams is equal to or above a threshold probability. If the cumulative probability of tested transmitter beams is equal to or above the threshold probability, step 880 is performed. If the cumulative probability of tested transmitter beams is below the threshold probability, step 890 is performed.

In step 870, the beam data is updated accordingly.

In step 880, a next ranked receiver beam is selected and step 820 is performed after step 880, i.e., a highest ranked transmitter beam is selected. Then step 830 is repeated by testing whether the selected transmitter beam and selected receiver beam establish a communication link. The method runs through the following steps until a communication link is established between a selected transmitter beam and a selected receiver beam that does not include a grouped beam.

In step 890, a next ranked transmitter beam is selected and step 830 is repeated by testing whether the selected transmitter beam and the selected receiver beam establish a communication link. The method runs through the following steps until a communication link is established between a selected transmitter beam and a selected receiver beam that does not include a grouped beam.

In step 895 a communication link is established between the selected transmitter beam and the selected receiver beam for communicating data between the transmitter device and the receiver device.

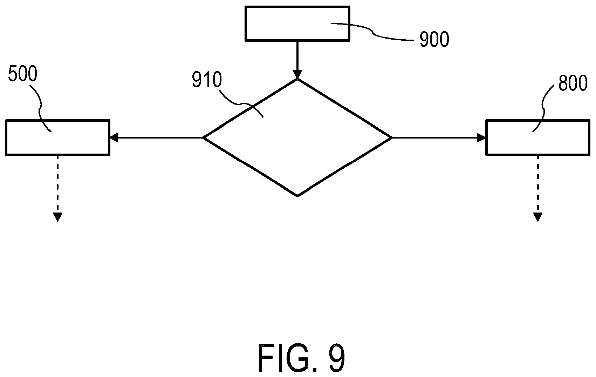

Fig. 9 shows a sixth embodiment of the method for selecting beams in a MIMO system that determines based on beam entropy which iterative process for selecting the beams is used. The MIMO system can for example be the RF beamforming system 100 presented in Fig. 1. Step 900 corresponds to step 700 of the fourth embodiment of the method, i.e., what has been said for step 700 of the fourth embodiment equivalently applies to the corresponding step 900 of the sixth embodiment.

In step 900, a beam entropy is determined for the beams of the MIMO system.

In step 910, the beam entropy is compared to a threshold beam entropy. If the beam entropy is above the threshold beam entropy, step 800 and its following steps are performed, i.e., the sixth embodiment of the method is performed. If the beam entropy is below or equal to the threshold beam entropy, step 500 and its following steps are performed, i.e., the second embodiment of the method is performed. The threshold beam entropy in this embodiment is 60 % of a maximum value of the beam entropy. In other embodiments the threshold beam entropy can also have a value between 30 % and 90 % of a maximum value of the beam entropy, e.g., 35 %, 45 %, or 60 %. The threshold beam entropy can depend on the PMF, a number of beams, or other parameters included in the beam data.

In summary, the method for RF beamforming and the RF beamforming system can rank beams based on their probabilities exploiting statistical information generated from using the method and system. The beam rankings can be dynamically updated depending upon progressively available history data. The beams can be tested in the order of their beam ranking. The probability of success for establishing a communication link in a few tests increases with the non-uniformity in the distribution of the probability across the beams. For not very uneven probability distributions a hybrid approach of statistical beam rank based beam search and multi-level beam search can offer high success probability in a first few tests. In cases in which no history data is available, multi-level beam search can be employed initially or model data can be used for providing initial probabilities for the beams. Usage of the system and method progressively add history data with time that yields the required statistics for improving the statistical beam rank based beam search and the hybrid approach.

The present invention regards selecting beams in a MIMO system. The MIMO system includes multiple transmitters and multiple receivers for providing first beams and second beams. For each of the beams a probability for establishing a communication link based on beam data including statistically analyzed history data generated by operating the MIMO system is provided. First beams and second beams are selected based on their probability for establishing a communication link in an iterative process until a communication link is established between a selected first beam and a selected second beam. This allows providing a method and RF beamforming system with reduced training time and thus less power consumption.

**Claims**

1.    A method for selecting beams (T1L1, T2L1; T1L2, T2L2, T3L2, T4L2; T1, ..., T9, R1, R2, R3) in a multiple input multiple output system (100) including a transmitter device (22) including multiple transmitter antenna elements (26) and a receiver device (24) including multiple receiver antenna elements (28) for providing first beams (R1, R2, R3) and second beams (T1L1, T2L1; T1L2, T2L2, T3L2, T4L2; T1, ..., T9), wherein the first beams (R1, R2, R3) are transmitter beams provided by the transmitter antenna elements (26) or receiver beams (R1, R2, R3) provided by the receiver antenna elements (28), wherein if the first beams (R1, R2, R3) are transmitter beams provided by the transmitter antenna elements (26), then the second beams (T1L1, T2L1; T1L2, T2L2, T3L2, T4L2; T1, ..., T9) are receiver beams provided by the receiver antenna elements (28), and if the first beams (R1, R2, R3) are receiver beams (R1, R2, R3) provided by the receiver antenna elements (28), then the second beams (T1L1, T2L1; T1L2, T2L2, T3L2, T4L2; T1, ..., T9) are transmitter beams (T1L1, T2L1; T1L2, T2L2, T3L2, T4L2; T1, ..., T9) provided by the transmitter antenna elements (26),
     the method comprising the steps:

     - providing for each of the first beams (R1, R2, R3) and each of the second beams (T1L1, T2L1; T1L2, T2L2, T3L2, T4L2; T1, ..., T9) a probability for establishing a communication link (30) based on beam data including statistically analyzed history data generated by operating the multiple input multiple output system (100) and
     - selecting first beams (R1, R2, R3) and second beams (T1L1, T2L1; T1L2, T2L2, T3L2, T4L2; T1, ..., T9) based on their probability for establishing a communication link (30) in an iterative process until a communication link (30) is established between a selected first beam (R1, R2, R3) and a selected second beam (T1L1, T2L1; T1L2, T2L2, T3L2, T4L2; T1, ..., T9);

     wherein the beam data, based on which the probability for establishing the communication link (30) is provided, additionally includes model data generated based on model assumptions for the multiple input multiple output system, wherein the model data includes statistically analyzed history data of other users.

2.    The method according to claim 1 comprising the step:

     - providing (500) a beam ranking for the beams (T1, ..., T9; R1, R2, R3) based on the beam data,
     and wherein the iterative process of selecting first beams (R1, R2, R3) and second beams (T1, ..., T9) based on their probability for establishing a communication link (30) until a communication link (30) is established between a selected first beam (R2) and a selected second beam (T5) includes the steps:

- selecting (510) the highest ranked first beam (R2),
- selecting (520) the highest ranked second beam (T5),
- testing (530) whether the selected first beam (R2) and the selected second beam (T5) establish a communication link (30), and

-- if a communication link (30) establishes:

--- updating (570) the beam data accordingly, and

-- if no communication link (30) establishes:

--- determining (540) whether a cumulative probability of tested second beams (T1, ..., T9) is equal to or above a second beams threshold probability, and

---- if the cumulative probability of tested second beams (T1, ..., T9) is equal to or above the second beams threshold probability:

----- determining (550) whether a cumulative probability of tested first beams (R1, R2, R3) is equal to or above a first beams threshold probability, and

------ if the cumulative probability of tested first beams (R1, R2, R3) is equal to or above the first beams threshold probability:

------- performing (560) multi-level beam search for determining a first beam (R1, R2, R3) and a second beam (T1, ..., T9) that establish a communication link (30) and
------- updating the beam data accordingly,

------ if the cumulative probability of tested first beams (R1, R2, R3) is below the first beams threshold probability:

------- selecting (580) a next ranked first beam (R1 R3), selecting the highest ranked second beam (T5), and repeat testing whether the selected first beam (R1, R2, R3) and selected second beam (T5) establish a communication link,

---- if the cumulative probability of tested second beams (T1,

..., T9) is below the second beams threshold probability:

----- selecting (590) a next ranked second beam (T1, T2, T3 T4, T6, T7, T8, T9) and repeat testing whether the selected first beam (R1, R2, R3) and the selected second beam (T1, T2, T3, T4, T6, T7, T8, T9) establish a communication link;

wherein the multi-level beam search comprises an initial step of:

- grouping beams (310) (T1L2, T2L2, T3L2, T4L2) into one or more grouped beams (T1L1, T2L1), wherein each grouped beam (T1L1, T2L1) includes two or more beams (T1L2, T2L2, T3L2, T4L2), and

wherein the following steps are repeated until a communication link (30) is established that does not include a grouped beam (T1L1, T2L1):

- selecting (320) a first beam (R1, R2, R3) and a second beam (T1L1, T2L1; T1L2 T2L2, T3L2, T4L2) based on their probability for establishing a communication link (30), and
- testing (330) whether a communication link (30) is established between the selected first beam (R1, R2, R3) and the selected second beam (T1L1, T2L1; T1L2, T2L2, T3L2, T4L2), wherein

-- if no communication link (30) is established, the method includes the steps:

--- selecting (340) another first beam (R1, R2, R3) and/or another second beam (T1L1, T2L1; T1L2, T2L2, T3L2, T4L2) based on their probability for establishing a communication link and repeat testing whether a communication link (30) is established between the selected first beam (R1, R2, R3) and the selected second beam (T1L1, T2L1; T1L2, T2L2, T3L2, T4L2),

-- if a communication link (30) is established that includes at least one grouped beam (T1L1, T2L1), the method includes the steps:

--- splitting (360) the grouped beam (T1L1, T2L1) into two or more beams (T1L2, T2L2, T3L2, T4L2), and
--- providing (370) for each of the beams (T1L2, T2L2, T3L2, T4L2) split from the grouped beam (T1L1, T2L1) an updated probability for establishing a communication link (30) based on the beam data and the knowledge that the grouped beam (T1L1, T2L1) established a communication link (30), and

-- if a communication link (30) is established that does not include a grouped beam (T1L1, T2L1), the method includes the step:

--- updating (380) the beam data accordingly.

3. The method according to claim 2, wherein the second beams threshold probability to be compared to the cumulative probability of tested second beams (T1, ..., T9) is at least 75 % and/or wherein the first beams threshold probability to be compared to the cumulative probability of tested first beams (R1, R2, R3) is at least 75 %.

4. The method according to claim 1, wherein the iterative process of selecting first beams (R1, R2, R3) and second beams (T1 L1, T2L1; T1L2, T2L2, T3L2, T4L2; T1, ..., T9) based on their probability for establishing a communication link (30) until a communication link (30) is established between a selected first beam (R2) and a selected second beam (T5) is performed by

- using multi-level beam search for determining a first beam (R1, R2, R3) and a second beam (T1L1, T2L1; T1 L2, T2L2, T3L2, T4L2) that establish a communication link based on the probabilities for establishing a communication link (30) of the beams (T1L1, T2L1; T1L2, T2L2, T3L2, T4L2; T1, ..., T9, R1, R2, R3)

wherein the multi-level beam search comprises an initial step of:

- grouping beams (310) (T1L2, T2L2, T3L2, T4L2) into one or more grouped beams (T1L1, T2L1), wherein each grouped beam (T1L1, T2L1) includes two or more beams (T1L2, T2L2, T3L2, T4L2), and wherein the following steps are repeated until a communication link (30) is established that does not include a grouped beam (T1L1, T2L1):
- selecting (320) a first beam (R1, R2, R3) and a second beam (T1L1, T2L1; T1L2 T2L2, T3L2, T4L2) based on their probability for establishing a communication link (30), and
- testing (330) whether a communication link (30) is established between the selected first beam (R1, R2, R3) and the selected second beam (T1L1, T2L1; T1L2, T2L2, T3L2, T4L2), wherein

-- if no communication link (30) is established, the method includes the steps:

--- selecting (340) another first beam (R1, R2, R3) and/or another second beam (T1L1, T2L1; T1L2, T2L2, T3L2, T4L2) based on their probability for establishing a communication link and repeat testing whether a communication link (30) is established between the selected first beam (R1, R2, R3) and the selected second beam (T1L1, T2L1; T1L2, T2L2, T3L2, T4L2),

-- if a communication link (30) is established that includes at least one grouped beam (T1L1, T2L1), the method includes the steps:

--- splitting (360) the grouped beam (T1L1, T2L1) into two or more beams (T1L2, T2L2, T3L2, T4L2), and
--- providing (370) for each of the beams (T1L2, T2L2, T3L2, T4L2) split from the grouped beam (T1L1, T2L1) an updated probability for establishing a communication link (30) based on the beam data and the knowledge that the grouped beam (T1L1, T2L1) established a communication link (30), and

-- if a communication link (30) is established that does not include a grouped beam (T1L1, T2L1), the method includes the step:

--- updating (380) the beam data accordingly.

5. The method according to claim 1, wherein the iterative process of selecting first beams (R1, R2, R3) and second beams (T1L1, T2L1; T1L2, T2L2, T3L2, T4L2; T1, ..., T9) based on their probability for establishing a communication link (30) until a communication link (30) is established between a selected first beam (R1, R2, R3) and a selected second beam (T1L2, T2L2, T3L2, T4L2) includes the steps:

- grouping beams (601) (T1L2, T2L2, T3L2, T4L2) into one or more grouped beams (T1L1, T2L1), wherein each grouped beam (T1L1, T2L1) includes two or more beams (T1L2, T2L2, T3L2, T4L2),
- providing (605) a beam ranking for the beams (T1L1, T2L1; R1, R2, R3) based on the beam data,
- selecting (610) the highest ranked first beam (R1, R2, R3),
- selecting (620) the highest ranked second beam (T1L1, T2L1)
- testing (630) whether the selected first beam (R1, R2, R3) and the selected second beam (T1L1, T2L1; T1L2, T2L2, T3L2, T4L2) establish a communication link (30), and

-- if a communication link (30) establishes that includes at least one grouped beam (T1L1, T2L1), the method includes the steps:

--- splitting (636) the grouped beam (T1L1, T2L1) into two or more beams (T1L2, T2L2, T3L2, T4L2), providing (637) for each of the beams (T1L2, T2L2, T3L2, T4L2) split from the grouped beam (T1L1, T2L1; T1L2) an updated probability for establishing a communication link (30) based on the beam data and the knowledge that the grouped beam (T1L1, T2L1) established a communication link (30), providing (638) a beam ranking for the beams (T1L2, T2L2 T3L2, T4L2) based on the beam data and the updated probability for establishing a communication link (30), selecting (610) the highest ranked first beam (R1, R2, R3), selecting (620) the highest ranked second beam (T1L2, T2L2, T3L2, T4L2) and repeat testing (630) whether the selected first beam (R1, R2, R3) and the selected second beam (T1L2, T2L2, T3L2, T4L2) establish a communication link (30),

-- if a communication link (30) is established that does not include a grouped beam (T1L1, T2L1), the method includes the step:

--- updating (670) the beam data accordingly, and

-- if no communication link establishes:

--- determining (640) whether a cumulative probability of tested second beams (T1L1, T2L1; T1L2, T2L2, T3L2, T4L2) is equal to or above a second beams threshold probability, and

---- if the cumulative probability of tested second beams (T1L1, T2L1; T1L2, T2L2, T3L2, T4L2) is equal to or above second beams the threshold probability:

----- determining (650) whether a cumulative probability of tested first beams (R1, R2, R3) is equal to or above a first beams threshold probability, and

------ if the cumulative probability of tested first beams (R1, R2, R3) is equal to or above the first beams threshold probability:

------- performing (660) multi-level beam search for determining a first beam (R1, R2, R3) and a second beam (T1L1, T2L1; T1L2, T2L2, T3L2, T4L2) that establish a communication link (30) and
------- updating (670) the beam data accordingly

------ if the cumulative probability of tested first beams (R1, R2, R3) is below the first beams threshold probability:

------- selecting (680) a next ranked first beam (R1 R3), selecting (620) the highest ranked second beam (T1L1, T2L1; T1L2, T2L2, T3L2, T4L2), and repeat testing (630) whether the selected first beam (R1, R3) and selected second beam (T1L1, T2L1; T1L2, T2L2, T3L2, T4L2) establish a communication link (30),

---- if the cumulative probability of tested second beams (T1L1, T2L1; T1L2, T2L2, T3L2, T4L2) is below the second beams threshold probability:

----- selecting (690) a next ranked second beam (T1L1, T2L1 T1L2, T2L2, T3L2, T4L2) and repeat testing whether the selected first beam (R1, R2, R3) and the selected second beam (T1L1, T2L1; T1L2, T2L2, T3L2, T4L2) establish a communication link (30),

wherein the multi-level beam search comprises an initial step of:

- grouping beams (310) (T1L2, T2L2, T3L2, T4L2) into one or more grouped beams (T1L1, T2L1), wherein each grouped beam (T1L1, T2L1) includes two or more beams (T1L2, T2L2, T3L2, T4L2), and wherein the following steps are repeated until a communication link (30) is established that does not include a grouped beam (T1L1, T2L1):
- selecting (320) a first beam (R1, R2, R3) and a second beam (T1L1, T2L1; T1L2 T2L2, T3L2, T4L2) based on their probability for establishing a communication link (30), and
- testing (330) whether a communication link (30) is established between the selected first beam (R1, R2, R3) and the selected second beam (T1L1, T2L1; T1L2, T2L2, T3L2, T4L2), wherein

-- if no communication link (30) is established, the method includes the steps:

--- selecting (340) another first beam (R1, R2, R3) and/or another second beam (T1L1, T2L1; T1L2, T2L2, T3L2, T4L2) based on their probability for establishing a communication link and repeat testing whether a communication link (30) is established between the selected first beam (R1, R2, R3) and the selected second beam (T1L1, T2L1; T1L2, T2L2, T3L2, T4L2),

-- if a communication link (30) is established that includes at least one grouped beam (T1L1, T2L1), the method includes the steps:

--- splitting (360) the grouped beam (T1L1, T2L1) into two or more beams (T1L2, T2L2, T3L2, T4L2), and
--- providing (370) for each of the beams (T1L2, T2L2, T3L2, T4L2) split from the grouped beam (T1L1, T2L1) an updated probability for establishing a communication link (30) based on the beam data and the knowledge that the grouped beam (T1L1, T2L1) established a communication link (30), and

-- if a communication link (30) is established that does not include a grouped beam (T1L1, T2L1), the method includes the step:

--- updating (380) the beam data accordingly.

6. The method according to claim 1 comprising the step:

- determining a beam entropy of the multiple input multiple output system (100) which is indicative of the probability mass function of the beams and depends on a level of randomness of the probability distribution for establishing a communication link (30), the beam entropy being defined as

$$Beam\ entropy = -\sum_{i=1}^{N} p_i log\ p_i$$

where $p_i$ is the probability of beam $i$ for establishing a communication link and $N$ is the total number of beams; and wherein the method according to claim 4 is performed if the beam entropy is above a first threshold beam entropy,

wherein the method according to claim 5 is performed if the beam entropy is below or equal to the first beam entropy and above a second threshold beam entropy, and wherein the method according to claim 2 or 3 is performed if the beam entropy is below or equal to the second threshold beam entropy.

7. The method according to claim 6, wherein the first threshold beam entropy and/or the second threshold beam entropy are adjustable based on beam data.

8. The method according to one of the claims 1 to 7, wherein the beam data includes user specific history data generated by operating the multiple input multiple output system (100) by a specific user.

9. The method according to one of the claims 1 to 8 comprising the step:

- establishing a communication link (30) between the selected first beam (R1, R2, R3) and the selected second beam (T1L1, T2L1; T1L2, T2L2, T3L2, T4L2; T1, ..., T9) for communicating data.

10. The method according to one of the claims 1 to 9, wherein a communication link (30) is considered to be established when for a distance above a threshold distance between the transmitters (26) and receivers (28),

a received power value is above a threshold power value,
a received data rate is above a threshold data rate,
a received signal strength indication above a threshold received signal strength indication, and/or
a data communication over the communication link has a signal-to-noise ratio above a threshold signal-to-noise ratio.

11. A radio frequency beamforming module (10) for selecting beams (T1L1, T2L1; T1L2, T2L2, T3L2, T4L2; T1, ..., T9; R1, R2, R3) for a multiple input multiple output system (100) wherein the multiple input multiple output system includes a transmitter device (22) including multiple transmitter antenna elements (26) and a receiver device (24) including multiple receiver antenna elements (28) for providing first beams (R1, R2, R3) and second beams (T1L1, T2L1; T1L2, T2L2, T3L2, T4L2; T1, ..., T9), the radio frequency beamforming module (10) comprising:

- a database (14) for storing beam data,
- a beam probability provider (16) configured for providing for each of the beams (T1L1, T2L1; T1L2, T2L2, T3L2, T4L2; T1, ..., T9; R1, R2, R3) a probability for establishing a communication link (30) based on the beam data, and
- a beam selector (20) configured for selecting first beams (R1, R2, R3) and second beams (T1L1, T2L1; T1L2, T2L2, T3L2, T4L2; T1, ..., T9) based on their probability for establishing a communication link (30) in an iterative process until a communication link (30) is established between a selected first beam (R1, R2, R3) and a selected second beam (T1L1, T2L1; T1L2, T2L2, T3L2, T4L2; T1, ..., T9), wherein the first beams (R1, R2, R3) are transmitter beams provided by transmitter antenna elements (26) or receiver beams (R1, R2, R3) provided by receiver antenna elements (28), wherein if the first beams (R1, R2, R3) are transmitter beams provided by the transmitter antenna elements (26), then the second beams (T1L1, T2L1; T1L2, T2L2, T3L2, T4L2; T1, ..., T9) are receiver beams provided by the receiver antenna elements (28), and if the first beams (R1, R2, R3) are receiver beams (R1, R2, R3) provided by the receiver antenna elements (28), then the second beams (T1L1, T2L1; T1L2, T2L2, T3L2, T4L2; T1, ..., T9) are transmitter beams (T1L1, T2L1; T1L2, T2L2, T3L2, T4L2; T1, ..., T9) provided by the transmitter antenna elements (26),

wherein the beam data, based on which the probability for establishing the communication link (30) is provided, additionally includes model data generated based on model assumptions for the multiple input multiple output system, wherein the model data includes statistically analyzed history data of other users.

12. A radio frequency beamforming system (100) comprising:

- a transmitter device (22) including multiple transmitter antenna elements (26),
- a receiver device (24) including multiple receiver antenna elements (28),
wherein the transmitter antenna elements (26) and the receiver antenna elements (28) are configured for providing first beams (R1, R2, R3) and second beams (T1L1, T2L1; T1L2, T2L2, T3L2, T4L2; T1, ..., T9), wherein the first beams (R1, R2, R3) are transmitter beams provided by the transmitter antenna elements (26) or receiver beams (R1, R2, R3) provided by the receiver antenna elements (28),

wherein if the first beams (R1, R2, R3) are transmitter beams provided by the transmitter antenna elements (26), then the second beams (T1L1, T2L1; T1L2, T2L2, T3L2, T4L2; T1, ..., T9) are receiver beams provided by the receiver antenna elements (28), and if the first beams (R1, R2, R3) are receiver beams (R1, R2, R3) provided by the receiver antenna elements (28), then the second beams (T1L1, T2L1; T1L2, T2L2, T3L2, T4L2; T1, ..., T9) are transmitter beams (T1L1, T2L1; T1L2, T2L2, T3L2, T4L2; T1, ..., T9) provided by the transmitter antenna elements (26), and

wherein at least one of the transmitter device (22) and the receiver device (24) includes the radio frequency beamforming module (10) according to claim 11.

**13.** A computer program product for selecting beams (T1L1, T2L1; T1L2, T2L2, T3L2, T4L2; T1, ..., T9; R1, R2, R3) in a multiple input multiple output system (100), wherein the computer program product comprises program code means for causing the radio frequency beamforming module (10) according to claim 11 to carry out the method as defined in claim 1, when the computer program product is run on the radio frequency beamforming module (10).

**Patentansprüche**

**1.** Ein Verfahren zur Auswahl von Strahlen (T1L1, T2L1; T1L2, T2L2, T3L2, T4L2; T1, ..., T9, R1, R2, R3) in einem multiple input multiple output System (100), umfassend eine Sendevorrichtung (22) mit mehreren Sendeantennenelementen (26) und eine Empfangsvorrichtung (24) mit mehreren Empfangsantennenelementen (28) zur Bereitstellung erster Strahlen (R1, R2, R3) und zweiter Strahlen (T1L1, T2L1; T1L2, T2L2, T3L2, T4L2; T1, ..., T9), wobei die ersten Strahlen (R1, R2, R3) von den Sendeantennenelementen (26) bereitgestellte Sendestrahlen oder von den Empfangsantennenelementen (28) bereitgestellte Empfängerstrahlen (R1, R2, R3) sind, wobei, wenn die ersten Strahlen (R1, R2, R3) von den Sendeantennenelementen (26) bereitgestellte Sendestrahlen sind, dann sind die zweiten Strahlen (T1L1, T2L1; T1L2, T2L2, T3L2, T4L2; T1, ..., T9) Empfängerstrahlen, die von den Empfängerantennenelementen (28) bereitgestellt werden, und wenn die ersten Strahlen (R1, R2, R3) von den Empfängerantennenelementen (28) bereitgestellte Empfängerstrahlen (R1, R2, R3) sind, dann sind die zweiten Strahlen (T1L1, T2L1; T1L2, T2L2, T3L2, T4L2; T1, ..., T9) Senderstrahlen (T1L1, T2L1; T1L2, T2L2, T3L2, T4L2; T1, ..., T9), die von den Sendeantennenelementen (26) bereitgestellt werden,

das Verfahren umfassend die Schritte:

- für jeden der ersten Strahlen (R1, R2, R3) und jeden der zweiten Strahlen (T1L1, T2L1; T1L2, T2L2, T3L2, T4L2; T1, ..., T9), Bereitstellen einer Wahrscheinlichkeit zum Herstellen einer Kommunikationsverbindung (30) auf der Grundlage von Strahldaten, die statistisch analysierte Verlaufsdaten beinhalten, die durch den Betrieb des multiple input multiple output Systems (100) erzeugt werden, und
- Auswahl von ersten Strahlen (R1, R2, R3) und zweiten Strahlen (T1L1, T2L1; T1L2, T2L2, T3L2, T4L2; T1, ..., T9) auf der Grundlage ihrer Wahrscheinlichkeit für die Herstellung einer Kommunikationsverbindung (30) in einem iterativen Prozess, bis eine Kommunikationsverbindung (30) zwischen einem ausgewählten ersten Strahl (R1, R2, R3) und einem ausgewählten zweiten Strahl (T1L1, T2L1; T1L2, T2L2, T3L2, T4L2; T1, ..., T9) hergestellt ist;

wobei die Strahldaten, auf deren Grundlage die Wahrscheinlichkeit für die Herstellung der Kommunikationsverbindung (30) bereitgestellt wird, zusätzlich Modelldaten beinhalten, die auf der Grundlage von Modellannahmen für das multiple input multiple output System erzeugt werden, wobei die Modelldaten statistisch analysierte Verlaufsdaten anderer Benutzer enthalten.

**2.** Verfahren nach Anspruch 1, umfassend den Schritt:

- Bereitstellen (500) einer Strahlenrangfolge für die Strahlen (T1, ..., T9; R1, R2, R3) auf der Grundlage der Strahldaten,
und wobei der iterative Prozess des Auswählens erster Strahlen (R1, R2, R3) und zweiter Strahlen (T1, ..., T9) auf der Grundlage ihrer Wahrscheinlichkeit für die Herstellung einer Kommunikationsverbindung (30), bis eine Kommunikationsverbindung (30) zwischen einem ausgewählten ersten Strahl (R2) und einem ausgewählten zweiten Strahl (T5) hergestellt ist, die Schritte umfasst:

- Auswahl (510) des ersten Strahls mit dem höchsten Rang (R2),
- Auswahl (520) des zweiten Strahls mit dem höchsten Rang (T5),

- Prüfung (530), ob der ausgewählte erste Strahl (R2) und der ausgewählte zweite Strahl (T5) eine Kommunikationsverbindung (30) herstellen, und

-- wenn eine Kommunikationsverbindung (30) hergestellt wird:

--- entsprechende Aktualisierung (540) der Strahldaten, und

-- wenn keine Kommunikationsverbindung (30) hergestellt wird:

--- Bestimmen (540), ob eine kumulative Wahrscheinlichkeit der geprüften zweiten Strahlen (T1, ..., T9) gleich oder höher als eine Schwellenwahrscheinlichkeit für zweite Strahlen liegt, und

---- wenn die kumulative Wahrscheinlichkeit der geprüften zweiten Strahlen (T1, ..., T9) gleich oder höher als die Schwellenwahrscheinlichkeit für zweite Strahlen ist:

----- Bestimmen (550), ob eine kumulative Wahrscheinlichkeit der geprüften ersten Strahlen (R1, R2, R3) gleich oder höher als eine Schwellenwahrscheinlichkeit für erste Strahlen ist, und

------ wenn die kumulative Wahrscheinlichkeit der geprüften ersten Strahlen (R1, R2, R3) gleich oder höher als die Schwellenwahrscheinlichkeit für erste Strahlen ist:

------- Durchführen (560) einer mehrstufigen Strahlensuche zur Bestimmung eines ersten Strahls (R1, R2, R3) und eines zweiten Strahls (T1, ..., T9), die eine Kommunikationsverbindung (30) herstellen, und
------- entsprechende Aktualisierung der Strahldaten,

------ wenn die kumulative Wahrscheinlichkeit der geprüften ersten Strahlen (R1, R2, R3) unter der Schwellenwahrscheinlichkeit für erste Strahlen liegt:

-------Auswahl (580) eines nächstrangigen ersten Strahls (R1, R3), Auswahl des höchstrangigen zweiten Strahls (T5) und wiederholte Prüfung, ob der ausgewählte erste Strahl (R1, R2, R3) und der ausgewählte zweite Strahl (T5) eine Kommunikationsverbindung herstellen,

---- wenn die kumulative Wahrscheinlichkeit der geprüften zweiten Strahlen (T1, ..., T9) unter der Schwellenwahrscheinlichkeit für zweite Strahlen liegt:

----- Auswahl (590) eines nächstrangigen zweiten Strahls (T1, T2, T3, T4, T6, T7, T8, T9) und wiederholte Prüfung, ob der ausgewählte erste Strahl (R1, R2, R3) und der ausgewählte zweite Strahl (T1, T2, T3, T4, T6, T7, T8, T9) eine Kommunikationsverbindung herstellen;

wobei die mehrstufige Strahlensuche einen Anfangsschritt umfasst:

- Gruppieren (310) von Strahlen (T1L2, T2L2, T3L2, T4L2) in einen oder mehrere gruppierte Strahlen (T1L1, T2L1), wobei jeder gruppierte Strahl (T1L1, T2L1) zwei oder mehr Strahlen (T1L2, T2L2, T3L2, T4L2) umfasst, und

wobei die folgenden Schritte wiederholt werden, bis eine Kommunikationsverbindung (30) hergestellt ist, die keinen gruppierten Strahl (T1L1, T2L1) umfasst:

- Auswahl (320) eines ersten Strahls (R1, R2, R3) und eines zweiten Strahls (T1L1, T2L1; T1L2, T2L2, T3L2, T4L2) auf der Grundlage ihrer Wahrscheinlichkeit für die Herstellung einer Kommunikationsverbindung (30), und
- Prüfen (330), ob eine Kommunikationsverbindung (30) zwischen dem ausgewählten ersten Strahl (R1, R2, R3) und dem ausgewählten zweiten Strahl (T1L1, T2L1; T1L2, T2L2, T3L2, T4L2) hergestellt ist, wobei

-- wenn keine Kommunikationsverbindung (30) hergestellt wird, umfasst das Verfahren die Schritte:

--- Auswahl (340) eines anderen ersten Strahls (R1, R2, R3) und/oder eines anderen zweiten Strahls (T1L1, T2L1; T1L2, T2L2, T3L2, T4L2) auf der Grundlage ihrer Wahrscheinlichkeit für die Herstellung einer Kommunikationsverbindung und wiederholte Prüfung, ob eine Kommunikationsverbindung (30) zwischen dem ausgewählten ersten Strahl (R1, R2, R3) und dem ausgewählten zweiten Strahl (T1L1, T2L1; T1L2, T2L2, T3L2, T4L2) hergestellt wird,

-- wenn eine Kommunikationsverbindung (30) hergestellt ist, die mindestens einen gruppierten Strahl (T1L1, T2L1) umfasst, umfasst das Verfahren die Schritte:

-- Aufteilung (360) des gruppierten Strahls (T1L1, T2L1) in zwei oder mehr Strahlen (T1L2, T2L2, T3L2, T4L2), und
--- für jeden der von dem gruppierten Strahl (T1L1, T2L1) aufgeteilten Strahlen (T1L2, T2L2, T3L2, T4L2), Bereitstellen (370) einer aktualisierten Wahrscheinlichkeit für die Herstellung einer Kommunikationsverbindung (30) auf der Grundlage der Strahldaten und des Wissens, dass der gruppierte Strahl (T1L1, T2L1) eine Kommunikationsverbindung (30) hergestellt hat, und

- wenn eine Kommunikationsverbindung (30) hergestellt wird, die keinen gruppierten Strahl (T1L1, T2L1) enthält, umfasst das Verfahren den Schritt:

--- entsprechende Aktualisierung (380) der Strahldaten.

3. Verfahren nach Anspruch 2, wobei die Schwellenwahrscheinlichkeit fürzweite Strahlen, die mit der kumulativen Wahrscheinlichkeit der geprüften zweiten Strahlen (T1, ..., T9) verglichen wird, mindestens 75 % beträgt und/oderwobei die Schwellenwahrscheinlichkeit für erste Strahlen, die mit der kumulativen Wahrscheinlichkeit der geprüften ersten Strahlen (R1, R2, R3) verglichen wird, mindestens 75 % beträgt.

4. Verfahren nach Anspruch 1, wobei der iterative Prozess der Auswahl erster Strahlen (R1, R2, R3) und zweiter Strahlen (T1L1, T2L1; T1L2, T2L2, T3L2, T4L2; T1, ..., T9) auf der Grundlage ihrer Wahrscheinlichkeit für die Herstellung einer Kommunikationsverbindung (30), bis eine Kommunikationsverbindung (30) zwischen einem ausgewählten ersten Strahl (R2) und einem ausgewählten zweiten Strahl (T5) hergestellt ist, durchgeführt wird durch

- Verwendung einermehrstufigen Strahlensuche zur Bestimmung eines ersten Strahls (R1, R2, R3) und eines zweiten Strahls (T1L1, T2L1; T1L2, T2L2, T3L2, T4L2), die eine Kommunikationsverbindung herstellen, basierend auf den Wahrscheinlichkeiten für die Herstellung einer Kommunikationsverbindung (30) der Strahlen (T1L1, T2L1; T1L2, T2L2, T3L2, T4L2; T1, ..., T9, R1, R2, R3)

wobei die mehrstufige Strahlensuche einen Anfangsschritt umfasst:

- Gruppieren von Strahlen (320) (T1L2, T2L2, T3L2, T4L2) in einen oder mehrere gruppierte Strahlen (T1L1, T2L1), wobei jeder gruppierte Strahl (T1L1, T2L1) zwei oder mehr Strahlen (T1L2, T2L2, T3L2, T4L2) umfasst, und

wobei die folgenden Schritte wiederholt werden, bis eine Kommunikationsverbindung (30) hergestellt ist, die keinen gruppierten Strahl (T1L1, T2L1) umfasst:

- Auswahl (320) eines ersten Strahls (R1, R2, R3) und eines zweiten Strahls (T1L1, T2L1; T1L2, T2L2, T3L2, T4L2) auf der Grundlage ihrer Wahrscheinlichkeit für die Herstellung einer Kommunikationsverbindung (30), und
- Prüfen (330), ob eine Kommunikationsverbindung (30) zwischen dem ausgewählten ersten Strahl (R1, R2, R3) und dem ausgewählten zweiten Strahl (T1L1, T2L1; T1L2, T2L2, T3L2, T4L2) hergestellt ist, wobei

-- wenn keine Kommunikationsverbindung (30) hergestellt wird, umfasst das Verfahren die Schritte:

--- Auswahl (340) eines anderen ersten Strahls (R1, R2, R3) und/oder eines anderen zweiten Strahls (T1L1, T2L1; T1L2, T2L2, T3L2, T4L2) auf der Grundlage ihrer Wahrscheinlichkeit für die Herstellung einer Kommunikationsverbindung und wiederholte Prüfung, ob eine Kommunikationsverbindung (30) zwischen dem ausgewählten ersten Strahl (R1, R2, R3) und dem ausgewählten zweiten Strahl (T1L1, T2L1; T1L2, T2L2, T3L2, T4L2) hergestellt wird,

-- wenn eine Kommunikationsverbindung (30) hergestellt ist, die mindestens einen gruppierten Strahl (T1L1, T2L1) umfasst, umfasst das Verfahren die Schritte:

-- Aufteilung (360) des gruppierten Strahls (T1L1, T2L1) in zwei oder mehr Strahlen (T1L2, T2L2, T3L2, T4L2), und
--- für jeden der von dem gruppierten Strahl (T1L1, T2L1) aufgeteilten Strahlen (T1L2, T2L2, T3L2, T4L2), Bereitstellen (370) einer aktualisierten Wahrscheinlichkeit für die Herstellung einer Kommunikationsverbindung (30) auf der Grundlage der Strahldaten und des Wissens, dass der gruppierte Strahl (T1L1, T2L1) eine Kommunikationsverbindung (30) hergestellt hat, und

- wenn eine Kommunikationsverbindung (30) hergestellt wird, die keinen gruppierten Strahl (T1L1, T2L1) enthält, umfasst das Verfahren den Schritt:

--- entsprechende Aktualisierung (380) der Strahldaten.

5. Verfahren nach Anspruch 1, wobei der iterative Prozess der Auswahl erster Strahlen (R1, R2, R3) und zweiter Strahlen (T1L1, T2L1; T1L2, T2L2, T3L2, T4L2; T1, ..., T9) auf der Grundlage ihrer Wahrscheinlichkeit für die Herstellung einer Kommunikationsverbindung (30), bis eine Kommunikationsverbindung (30) zwischen einem ausgewählten ersten Strahl (R1, R2, R3) und einem ausgewählten zweiten Strahl (T1L2, T2L2, T3L2, T4L2) hergestellt ist, die Schritte umfasst:

- Gruppierung von Strahlen (601) (T1L2, T2L2, T3L2, T4L2) in einen oder mehrere gruppierte Strahlen (T1L1, T2L1), wobei jeder gruppierte Strahl (T1L1, T2L1) zwei oder mehrere Strahlen (T1L2, T2L2, T3L2, T4L2) umfasst,
- Bereitstellung (605) einer Strahlenrangfolge für die Strahlen (T1L1, T2L1; R1, R2, R3) auf der Grundlage der Strahldaten,
- Auswahl (610) des ersten Strahls mit dem höchsten Rang (R1, R2, R3),
- Auswahl (620) des zweiten Strahls mit dem höchsten Rang (T1L1, T2L1),
- Prüfung (630), ob der ausgewählte erste Strahl (R1, R2, R3) und der ausgewählte zweite Strahl (T1L1, T2L1; T1L2, T2L2, T3L2, T4L2) eine Kommunikationsverbindung (30) herstellen, und

-- wenn eine Kommunikationsverbindung (30) hergestellt wird, die mindestens einen gruppierten Strahl (T1L1, T2L1) umfasst, umfasst das Verfahren die Schritte:

--- Aufteilung (636) des gruppierten Strahls (T1L1, T2L1) in zwei oder mehr Strahlen (T1L2, T2L2, T3L2, T4L2), für jeden der von dem gruppierten Strahl (T1L1, T2L1; T1L2), aufgeteilten Strahlen (T1L2, T2L2, T3L2, T1L2) Bereitstellen einer aktualisierten Wahrscheinlichkeit für die Herstellung einer Kommunikationsverbindung (30) auf der Grundlage der Strahldaten und des Wissens, dass der gruppierte Strahl (T1L1, T2L1) eine Kommunikationsverbindung (30) hergestellt hat, Bereitstellen einer Strahlrangfolge für die Strahlen (T1L2, T2L2, T3L2, T4L2) auf der Grundlage der Strahldaten und der aktualisierten Wahrscheinlichkeit für die Herstellung einer Kommunikationsverbindung (30), Auswahl des ersten Strahls mit dem höchsten Rang (R1, R2, R3), Auswahl des zweiten Strahls mit dem höchsten Rang (T1 L2, T2L2, T3L2, T4L2) und wiederholtes Prüfung, ob der ausgewählte erste Strahl (R1, R2, R3) und der ausgewählte zweite Strahl (T1L2, T2L2, T3L2, T4L2) eine Kommunikationsverbindung (30) herstellen,

- wenn eine Kommunikationsverbindung (30) hergestellt wird, die keinen gruppierten Strahl (T1L1, T2L1) umfasst, umfasst das Verfahren den Schritt:

--- entsprechende Aktualisierung (670) der Strahldaten, und
-- wenn keine Kommunikationsverbindung hergestellt wird:

--- Bestimmen (640), ob eine kumulative Wahrscheinlichkeit der geprüften zweiten Strahlen (T1L1, T2L1; T1L2, T2L2, T3L2, T4L2) gleich oder höher als eine Schwellenwahrscheinlichkeit für zweite Strahlen liegt, und

---- wenn die kumulative Wahrscheinlichkeit der geprüften zweiten Strahlen (T1L1, T2L1; T1L2, T2L2, T3L2, T4L2) gleich oder höher als die Schwellenwahrscheinlichkeit für zweite Strahlen ist:

----- Bestimmen (650), ob eine kumulative Wahrscheinlichkeit der geprüften ersten Strahlen (R1, R2, R3) gleich oder höher als eine Schwellenwahrscheinlichkeit für erste Strahlen ist, und

------ wenn die kumulative Wahrscheinlichkeit der geprüften ersten Strahlen (R1, R2, R3) gleich oder höher als die Schwellenwahrscheinlichkeit für erste Strahlen ist:

------- Durchführen (660) einer mehrstufigen Strahlensuche zur Bestimmung eines ersten Strahls (R1, R2, R3) und eines zweiten Strahls (T1L1, T2L1; T1L2, T2L2, T3L2, T4L2), die eine Kommunikationsverbindung (30) herstellen, und
------- entsprechende Aktualisierung (670) der Strahldaten,

------ wenn die kumulative Wahrscheinlichkeit der geprüften ersten Strahlen (R1, R2, R3) unter der Schwellenwahrscheinlichkeit für erste Strahlen liegt:

------- Auswahl (680) eines nächstrangigen ersten Strahls (R1, R3), Auswahl (620) des höchstrangigen zweiten Strahls (T1L1, T2L1; T1L2, T2L2, T3L2, T4L2) und wiederholte Prüfung (630), ob der ausgewählte erste Strahl (R1, R3) und der ausgewählte zweite Strahl (T1L1, T2L1; T1L2, T2L2, T3L2, T4L2) eine Kommunikationsverbindung (30) herstellen,

---- wenn die kumulative Wahrscheinlichkeit der geprüften zweiten Strahlen (T1L1, T2L1; T1L2, T2L2, T3L2, T4L2) unter der Schwellenwahrscheinlichkeit für zweite Strahlen liegt:

----- Auswahl (690) eines nächstrangigen zweiten Strahls (T1L1, T2L1; T1L2, T2L2, T3L2, T4L2) und wiederholte Prüfung, ob der ausgewählte erste Strahl (R1, R2, R3) und der ausgewählte zweite Strahl (T1L1, T2L1; T1L2, T2L2, T3L2, T4L2) eine Kommunikationsverbindung (30) herstellen,

wobei die mehrstufige Strahlensuche einen Anfangsschritt umfasst:

- Gruppieren von Strahlen (310) (T1L2, T2L2, T3L2, T4L2) in einen oder mehrere gruppierte Strahlen (T1L1, T2L1), wobei jeder gruppierte Strahl (T1L1, T2L1) zwei oder mehr Strahlen (T1L2, T2L2, T3L2, T4L2) umfasst, und

wobei die folgenden Schritte wiederholt werden, bis eine Kommunikationsverbindung (30) hergestellt ist, die keinen gruppierten Strahl (T1L1, T2L1) umfasst:

- Auswahl (320) eines ersten Strahls (R1, R2, R3) und eines zweiten Strahls (T1L1, T2L1; T1L2, T2L2, T3L2, T4L2) auf der Grundlage ihrer Wahrscheinlichkeit für die Herstellung einer Kommunikationsverbindung (30), und
- Prüfen (330), ob eine Kommunikationsverbindung (30) zwischen dem ausgewählten ersten Strahl (R1, R2, R3) und dem ausgewählten zweiten Strahl (T1L1, T2L1; T1L2, T2L2, T3L2, T4L2) hergestellt ist, wobei

-- wenn keine Kommunikationsverbindung (30) hergestellt wird, umfasst das Verfahren die Schritte:

--- Auswahl (340) eines anderen ersten Strahls (R1, R2, R3) und/oder eines anderen zweiten Strahls (T1L1, T2L1; T1L2, T2L2, T3L2, T4L2) auf der Grundlage ihrer Wahrscheinlichkeit für die Herstellung einer Kommunikationsverbindung und wiederholte Prüfung, ob eine Kommunikationsverbindung (30) zwischen dem ausgewählten ersten Strahl (R1, R2, R3) und dem ausgewählten zweiten Strahl (T1L1, T2L1; T1L2, T2L2, T3L2, T4L2) hergestellt wird,

-- wenn eine Kommunikationsverbindung (30) hergestellt ist, die mindestens einen gruppierten Strahl (T1L1, T2L1) umfasst, umfasst das Verfahren die Schritte:

-- Aufteilung (360) des gruppierten Strahls (T1L1, T2L1) in zwei oder mehr Strahlen (T1L2, T2L2, T3L2, T4L2), und

--- für jeden der von dem gruppierten Strahl (T1L1, T2L1) aufgeteilten Strahlen (T1L2, T2L2, T3L2, T4L2) Bereitstellen (370) einer aktualisierten Wahrscheinlichkeit für die Herstellung einer Kommunikationsverbindung (30) auf der Grundlage der Strahldaten und des Wissens, dass der gruppierte Strahl (T1L1, T2L1) eine Kommunikationsverbindung (30) hergestellt hat, und

- wenn eine Kommunikationsverbindung (30) hergestellt wird, die keinen gruppierten Strahl (T1L1, T2L1) enthält, umfasst das Verfahren den Schritt:

--- entsprechende Aktualisierung (380) der Strahldaten.

6.  Verfahren nach Anspruch 1, umfassend den Schritt:

- Bestimmen einer Strahlentropie des multiple input multiple output Systems (100), die die Wahrscheinlichkeitsmassenfunktion der Strahlen angibt und von einem Grad der Zufälligkeit der Wahrscheinlichkeitsverteilung für die Herstellung einer Kommunikationsverbindung (30) abhängt, wobei die Strahlentropie definiert ist als

$$Beam\ entropy = -\sum_{i=1}^{N} p_i log\ p_i$$

wobei pi die Wahrscheinlichkeit des Strahls i für die Herstellung einer Kommunikationsverbindung ist, und N die Gesamtzahl der Strahlen ist, und
wobei das Verfahren nach Anspruch 4 durchgeführt wird, wenn die Strahlentropie über einem ersten Schwellenwert für die Strahlentropie liegt,
wobei das Verfahren nach Anspruch 5 durchgeführt wird, wenn die Strahlentropie unter oder gleich der ersten Strahlentropie und über einem zweiten Schwellenwert für die Strahlentropie liegt, und
wobei das Verfahren nach Anspruch 2 oder 3 durchgeführt wird, wenn die Strahlentropie unter oder gleich dem zweiten Schwellenwert für die Strahlentropie liegt.

7.  Verfahren nach Anspruch 6, wobei die erste Schwellenstrahlentropie und/oder die zweite Schwellenstrahlentropie auf der Grundlage von Strahldaten einstellbar sind.

8.  Verfahren nach einem der Ansprüche 1 bis 7, wobei die Strahldaten benutzerspezifische Verlaufsdaten enthalten, die durch den Betrieb des multiple input multiple output Systems (100) durch einen bestimmten Benutzer erzeugt wurden.

9.  Verfahren nach einem der Ansprüche 1 bis 8, umfassend den Schritt:

- Einrichten einer Kommunikationsverbindung (30) zwischen dem ausgewählten ersten Strahl (R1, R2, R3) und dem ausgewählten zweiten Strahl (T1L1, T2L1; T1L2, T2L2, T3L2, T4L2; T1, ..., T9) zur Datenübertragung.

10. Verfahren nach einem der Ansprüche 1 bis 9, wobei eine Kommunikationsverbindung (30) als hergestellt gilt, wenn für einen Abstand zwischen den Sendern (26) und Empfängern (28) höher als ein Abstand-Schwelle,

ein empfangener Leistungswert höher als ein Leistungsschwellenwert ist,
eine empfangene Datenrate höher als ein Datenrate-Schwelle- ist,
ein Empfangsfeldstärkeindikator höher als ein über einem Empfangsfeldstärkeindikator-Schwellet ist und/oder eine Datenkommunikation über die Kommunikationsverbindung ein Signal-Rausch-Verhältnis umfasst, das höher als ein Signal-Rausch-Verhältnis Schwelle ist.

11. Ein Hochfrequenz-Strahlformungsmodul (10) zur Auswahl von Strahlen (T1L1, T2L1; T1L2, T2L2, T3L2, T4L2; T1, ..., T9; R1, R2, R3) für ein multiple input multiple output System (100), wobei das multiple input multiple output System eine Sendevorrichtung (22) mit mehreren Sendeantennenelementen (26) und eine Empfangsvorrichtung (24) mit mehreren Empfangsantennenelementen (28) umfasst, um erste Strahlen (R1, R2, R3) und zweite Strahlen (T1L1, T2L1; T1L2, T2L2, T3L2, T4L2; T1, ..., T9) bereitzustellen, wobei das Hochfrequenz-Strahlformungsmodul (10) umfasst:

- eine Datenbank (14) zur Speicherung von Strahldaten,

- einen Strahlwahrscheinlichkeitsanbieter (16), der konfiguriert ist, für jeden der Strahlen (T1L1, T2L1; T1L2, T2L2, T3L2, T4L2; T1, ..., T9; R1, R2, R3) eine Wahrscheinlichkeit für die Herstellung einer Kommunikationsverbindung (30) auf der Grundlage der Strahldaten bereitzustellen, und

- einen Strahlselektor (20), der konfiguriert ist, erste Strahlen (R1, R2, R3) und zweite Strahlen (T1L1, T2L1; T1L2, T2L2, T3L2, T4L2; T1, ..., T9) auf der Grundlage ihrer Wahrscheinlichkeit für die Herstellung einer Kommunikationsverbindung (30) in einem iterativen Prozess, bis eine Kommunikationsverbindung (30) zwischen einem ausgewählten ersten Strahl (R1, R2, R3) und einem ausgewählten zweiten Strahl (T1L1, T2L1; T1L2, T2L2, T3L2, T4L2; T1, ..., T9) auszuwählen, wobei die ersten Strahlen (R1, R2, R3) von Senderantennenelementen (26) bereitgestellte Sendestrahlen oder von Empfängerantennenelementen (28) bereitgestellte Empfängerstrahlen (R1, R2, R3) sind, wobei, wenn die ersten Strahlen (R1, R2, R3) von den Senderantennenelementen (26) bereitgestellte Sendestrahlen sind, dann sind die zweiten Strahlen (T1L1, T2L1; T1L2, T2L2, T3L2, T4L2; T1, ..., T9) Empfängerstrahlen, die von den Empfängerantennenelementen (28) bereitgestellt werden, und wenn die ersten Strahlen (R1, R2, R3) von den Empfängerantennenelementen (28) bereitgestellte Empfängerstrahlen (R1, R2, R3) sind, dann sind die zweiten Strahlen (T1L1, T2L1; T1L2, T2L2, T3L2, T4L2; T1, ..., T9) Senderstrahlen (T1L1, T2L1; T1L2, T2L2, T3L2, T4L2; T1, ..., T9), die von den Sendeantennenelementen (26) bereitgestellt werden,

wobei die Strahldaten, auf deren Grundlage die Wahrscheinlichkeit für die Herstellung der Kommunikationsverbindung (30) bereitgestellt wird, zusätzlich Modelldaten umfassen, die auf der Grundlage von Modellannahmen für das multiple input multiple output System erzeugt werden, wobei die Modelldaten statistisch analysierte Verlaufsdaten anderer Benutzer enthalten.

12. Hochfrequenz-Strahlformungssystem (100), umfassend:

- eine Sendevorrichtung (22), umfassend mehrere Sendeantennenelemente (26),
- eine Empfangsvorrichtung (24) umfassend mehrere Empfangsantennenelemente (28),
wobei die Senderantennenelemente (26) und die Empfängerantennenelemente (28) konfiguriert sind, erste Strahlen (R1, R2, R3) und zweite Strahlen (T1L1, T2L1; T1L2, T2L2, T3L2, T4L2; T1, ..., T9) bereitzustellen, wobei die ersten Strahlen (R1, R2, R3) von den Sendeantennenelementen (26) bereitgestellte Sendestrahlen oder von den Empfangsantennenelementen (28) bereitgestellte Empfängerstrahlen (R1, R2, R3) sind, wobei, wenn die ersten Strahlen (R1, R2, R3) von den Senderantennenelementen (26) bereitgestellte Sendestrahlen sind, dann sind die zweiten Strahlen (T1L1, T2L1; T1L2, T2L2, T3L2, T4L2; T1, ..., T9) Empfängerstrahlen, die von den Empfängerantennenelementen (28) bereitgestellt werden, und wenn die ersten Strahlen (R1, R2, R3) von den Empfängerantennenelementen (28) bereitgestellte Empfängerstrahlen (R1, R2, R3) sind, dann sind die zweiten Strahlen (T1L1, T2L1; T1L2, T2L2, T3L2, T4L2; T1, ..., T9) Senderstrahlen (T1L1, T2L1; T1L2, T2L2, T3L2, T4L2; T1, ..., T9), die von den Senderantennenelementen (26) bereitgestellt werden, und wobei mindestens eine der Sendevorrichtung (22) und der Empfangsvorrichtung (24) das Hochfrequenz-Strahlformungsmodul (10) nach Anspruch 11 umfasst.

13. Computerprogrammprodukt zum Auswählen von Strahlen (T1L1, T2L1; T1L2, T2L2, T3L2, T4L2; T1, ..., T9; R1, R2, R3) in einem multiple input multiple output System (100), wobei das Computerprogrammprodukt Programmcodemittel umfasst, um das Hochfrequenz-Strahlformungsmodul (10) nach Anspruch 11 zu veranlassen, das in Anspruch 1 definierte Verfahren auszuführen, wenn das Computerprogrammprodukt auf dem Hochfrequenz-Strahlformungsmodul (10) ausgeführt wird.

**Revendications**

1. Procédé de sélection de faisceaux (T1L1, T2L1 ; T1L2, T2L2, T3L2, T4L2 ; T1, ..., T9, R1, R2, R3) dans un système à entrées multiples et sorties multiples (100) comprenant un dispositif émetteur (22) comprenant de multiples éléments d'antenne émetteur (26) et un dispositif récepteur (24) comprenant de multiples éléments d'antenne de réception (28) pour fournir des premiers faisceaux (R1, R2, R3) et des deuxièmes faisceaux (T1L1, T2L1 ; T1L2, T2L2, T3L2, T4L2 ; T1, T9 ), dans lequel les premiers faisceaux (R1, R2, R3) sont des faisceaux émetteurs fournis par les éléments d'antenne émetteur (26) ou des faisceaux récepteurs (R1, R2, R3) fournis par les éléments d'antenne de réception (28), dans lequel si les premiers faisceaux (R1, R2, R3) sont des faisceaux émetteurs fournis par les éléments d'antenne émetteur (26), puis les deuxièmes faisceaux (T1L1, T2L1 ; T1L2, T2L2, T3L2, T4L2 ; T1, ..., T9) sont des faisceaux récepteurs fournis par les éléments d'antenne de réception (28), et si les premiers faisceaux (R1, R2, R3) sont des faisceaux récepteurs (R1, R2, R3) fournis par les éléments d'antenne de réception (28), alors les deuxièmes faisceaux (T1L1, T2L1 ; T1L2, T2L2 , T3L2, T4L2 ; T1, T9) sont des faisceaux émetteurs (T1L1, T2L1 ; T1L2, T2L2, T3L2, T4L2 ; T1, . T9) fournis par les éléments d'antenne émetteur (26),

le procédé comprenant les étapes consistant à :

- fournir pour chacun des premiers faisceaux (R1, R2, R3) et chacun des deuxièmes faisceaux (T1L1, T2L1 ; T1L2, T2L2, T3L2, T4L2 ; T1, ..., T9) une probabilité d'établissement d'une liaison de communication (30) sur la base de données de faisceau comprenant des données historiques analysées statistiquement générées par le fonctionnement du système à entrées multiples et sorties multiples (100) et
- sélectionner des premiers faisceaux (R1, R2, R3) et des deuxièmes faisceaux (T1L1, T2L1 ; T1L2, T2L2, T3L2, T4L2 ; T1, ..., T9) sur la base de leur probabilité d'établir une liaison de communication (30) dans un processus itératif jusqu'à ce qu'une liaison de communication (30) soit établie entre un premier faisceau sélectionné (R1, R2, R3) et un deuxième faisceau sélectionné (T1L1, T2L1 ; T1L2, T2L2, T3L2, T4L2 ; T1, ..., T9) ;

dans lequel les données de faisceau, sur la base desquelles la probabilité d'établissement de la liaison de communication (30) est fournie, comprennent en outre des données de modèle générées sur la base d'hypothèses de modèle pour le système à entrées et sorties multiples, les données de modèle comprenant des données d'historique analysées statistiquement d'autres utilisateurs .

2.  Procédé selon la revendication 1 comprenant l'étape consistant à :

- fournir (500) un classement de faisceau pour les faisceaux (T1, T9 ; R1, R2, R3) sur la base des données de faisceau,
et dans lequel le processus itératif de sélection de premiers faisceaux (R1, R2, R3) et de deuxièmes faisceaux (T1, ..., T9) sur la base de leur probabilité d'établir une liaison de communication (30) jusqu'à ce qu'une liaison de communication (30) soit établie entre un premier faisceau sélectionné (R2) et un deuxième faisceau sélectionné (T5) comprend les étapes consistant à :

- sélectionner (510) le premier faisceau (R2) le mieux classé,
- sélectionner (520) le deuxième faisceau (T5) le mieux classé
- tester (530) si le premier faisceau sélectionné (R2) et le deuxième faisceau sélectionné (T5) établissent une liaison de communication (30), et

-- si une liaison de communication (30) est établie :

--- mettre à jour (570) les données de faisceau en conséquence, et

-- si aucune liaison de communication (30) n'est établie :

--- déterminer (540) si une probabilité cumulative des deuxièmes faisceaux testés (T1, ..., T9) est égale ou supérieure à une probabilité seuil des deuxièmes faisceaux, et

---- si la probabilité cumulative des deuxièmes faisceaux testés (T1, T9) est égale ou supérieure à la probabilité seuil des deuxièmes faisceaux :

----- déterminer (550) si une probabilité cumulative des premiers faisceaux testés (R1, R2, R3) est égale ou supérieure à une probabilité seuil des premiers faisceaux, et

------ si la probabilité cumulative des premiers faisceaux testés (R1, R2, R3) est égale ou supérieure à la probabilité seuil des premiers faisceaux :

------- effectuer (560) une recherche de faisceaux multi-niveaux pour déterminer un premier faisceau (R1, R2, R3) et un deuxième faisceau (T1, T9) qui établissent une liaison de communication (30) et
------- mettre à jour les données du faisceau en conséquence,

------ si la probabilité cumulative des premiers faisceaux testés (R1, R2, R3) est inférieure à la probabilité seuil des premiers faisceaux :

------- sélectionner (580) un premier faisceau (R1, R3) classé suivant, sélectionner le deuxième faisceau (T5) le mieux classé et répéter le test pour savoir si le premier faisceau sélectionné (R1, R2, R3) et le deuxième faisceau sélectionné (T5) établissent une liaison de communication,

---- si la probabilité cumulative des deuxièmes faisceaux testés (T1, T9) est inférieure à la probabilité seuil des deuxièmes faisceaux :

----- sélectionner (590) un deuxième faisceau classé suivant (T1, T2, T3, T4, T6, T7, T8, T9) et répéter le test pour savoir si le premier faisceau sélectionné (R1, R2, R3) et le deuxième faisceau sélectionné (T1, T2, T3, T4, T6, T7, T8, T9) établissent une liaison de communication ;

dans lequel la recherche de faisceaux à plusieurs niveaux comprend une étape initiale consistant à :

- regrouper des faisceaux (310) (T1L2, T2L2, T3L2, T4L2) en un ou plusieurs faisceaux groupés (T1L1, T2L1), chaque faisceau groupé (T1L1, T2L1) comprenant deux ou plusieurs faisceaux (T1L2, T2L2, T3L2, T4L2), et

dans lequel les étapes suivantes sont répétées jusqu'à ce qu'une liaison de communication (30) soit établie qui ne comprend pas de faisceau groupé (T1L1, T2L1) :

- sélectionner (320) un premier faisceau (R1, R2, R3) et un deuxième faisceau (T1L1, T2L1 ; T1L2, T2L2, T3L2, T4L2) sur la base de leur probabilité d'établir une liaison de communication (30), et
- tester (330) si une liaison de communication (30) est établie entre le premier faisceau sélectionné (R1, R2, R3) et le deuxième faisceau sélectionné (T1L1, T2L1 ; T1L2, T2L2, T3L2, T4L2), dans lequel

-- si aucune liaison de communication (30) n'est établie, le procédé comprend les étapes consistant à :

--- sélectionner (340) un autre premier faisceau (R1, R2, R3) et/ou un autre deuxième faisceau (T1L1, T2L1 ; T1L2, T2L2, T3L2, T4L2) sur la base de leur probabilité d'établir une liaison de communication et répéter le test pour savoir si une liaison de communication (30) est établie entre le premier faisceau sélectionné (R1, R2, R3) et le deuxième faisceau sélectionné (T1L1, T2L1 ; L2, T2L2, T3L2, T4L2),

-- si une liaison de communication (30) comprenant au moins un faisceau groupé (T1L1, T2L1) est établie, le procédé comprend les étapes consistant à :

--- diviser (360) le faisceau groupé (T1L1, T2L1) en deux faisceaux ou plus (T1L2, T2L2, T3L2, T4L2), et
--- fournir (370) pour chacun des faisceaux (T1L2, T2L2, T3L2, T4L2) séparés du faisceau groupé (T1L1, T2L1) une probabilité mise à jour d'établir une liaison de communication (30) sur la base des données de faisceau et des connaissances que le faisceau groupé (T1L1, T2L1) a établi une liaison de communication (30), et

-- si une liaison de communication (30) est établie ne comprenant pas de faisceau groupé (T1L1, T2L1), le procédé comprend l'étape consistant à :

--- mettre à jour (380) les données de faisceau en conséquence.

3. Procédé selon la revendication 2, dans lequel la probabilité seuil des deuxièmes faisceaux à comparer à la probabilité cumulative des deuxièmes faisceaux testés (T1, T9) est d'au moins 75 % et/ou dans lequel la probabilité seuil des premiers faisceaux à comparer à la probabilité cumulative des premiers faisceaux testés (R1, R2, R3) est d'au moins 75 %.

4. Procédé selon la revendication 1, dans lequel le processus itératif de sélection de premiers faisceaux (R1, R2, R3) et de deuxièmes faisceaux (T1L1, T2L1 ; T1L2, T2L2, T3L2, T4L2 ; T1, T9) en fonction de leur probabilité d'établissement d'une liaison de communication (30) jusqu'à ce qu'une liaison de communication (30) soit établie entre un premier faisceau sélectionné (R2) et un deuxième faisceau sélectionné (T5) est réalisée par les étapes consistant à :

- utiliser une recherche de faisceaux à plusieurs niveaux pour déterminer un premier faisceau (R1, R2, R3) et un deuxième faisceau (T1L1, T2L1 ; T1L2, T2L2, T3L2, T4L2) qui établissent une liaison de communication sur la base des probabilités d'établissement d'une liaison de communication (30) des faisceaux (T1L1, T2L1 ; T1L2, T2L2, T3L2, T4L2 ; T1, ..., T9, R1, R2, R3)
dans lequel la recherche de faisceaux à plusieurs niveaux comprend une étape initiale consistant à :

- regrouper des faisceaux (310) (T1L2, T2L2, T3L2, T4L2) en un ou plusieurs faisceaux groupés (T1L1, T2L1), chaque faisceau groupé (T1L1, T2L1) comprenant deux ou plusieurs faisceaux (T1L2, T2L2, T3L2, T4L2), et

dans lequel les étapes suivantes sont répétées jusqu'à ce qu'une liaison de communication (30) soit établie qui ne comprend pas de faisceau groupé (T1L1, T2L1) :

- sélectionner (320) un premier faisceau (R1, R2, R3) et un deuxième faisceau (T1L1, T2L1 ; T1L2, T2L2, T3L2, T4L2) sur la base de leur probabilité d'établir une liaison de communication (30), et
- tester (330) si une liaison de communication (30) est établie entre le premier faisceau sélectionné (R1, R2, R3) et le deuxième faisceau sélectionné (T1L1, T2L1 ; T1L2, T2L2, T3L2, T4L2), dans lequel

-- si aucune liaison de communication (30) n'est établie, le procédé comprend les étapes consistant à :

--- sélectionner (340) un autre premier faisceau (R1, R2, R3) et/ou un autre deuxième faisceau (T1L1, T2L1 ; T1L2, T2L2, T3L2, T4L2) sur la base de leur probabilité d'établir une liaison de communication et répéter le test pour savoir si une liaison de communication (30) est établie entre le premier faisceau sélectionné (R1, R2, R3) et le deuxième faisceau sélectionné (T1L1, T2L1 ; T1L2, T2L2, T3L2, T4L2),

-- si une liaison de communication (30) comprenant au moins un faisceau groupé (T1L1, T2L1) est établie, le procédé comprend les étapes consistant à :

--- diviser (360) le faisceau groupé (T1L1, T2L1) en deux ou plusieurs faisceaux (T1L2, T2L2, T3L2, T4L2), et
--- fournir (370) pour chacun des faisceaux (T1L2, T2L2, T3L2, T4L2) séparés du faisceau groupé (T1L1, T2L1) une probabilité mise à jour pour établir une liaison de communication (30) sur la base des données de faisceau et des connaissances que le faisceau groupé (T1L1, T2L1) a établi une liaison de communication (30), et

-- si une liaison de communication (30) est établie qui ne comprenant pas de faisceau groupé (T1L1, T2L1), le procédé comprend l'étape consistant à :

--- mettre à jour (380) les données de faisceau en conséquence.

5. Procédé selon la revendication 1, dans lequel le processus itératif de sélection de premiers faisceaux (R1, R2, R3) et de deuxièmes faisceaux (T1L1, T2L1 ; T1L2, T2L2, T3L2, T4L2 ; T1, T9) en fonction de leur probabilité de l'établissement d'une liaison de communication (30) jusqu'à ce qu'une liaison de communication (30) soit établie entre un premier faisceau sélectionné (R1, R2, R3) et un deuxième faisceau sélectionné (T1L2, T2L2, T3L2, T4L2) comprend les étapes consistant à :

- regrouper des faisceaux (601) (T1L2, T2L2, T3L2, T4L2) en un ou plusieurs faisceaux groupés (T1L1, T2L1), chaque faisceau groupé (T1L1, T2L1) comprenant deux ou plusieurs faisceaux (T1L2, T2L2, T3L2, T4L2),
- fournir (605) un classement de faisceaux pour les faisceaux (T1L1, T2L1 ; R1, R2, R3) sur la base des données de faisceaux,
- sélectionner (610) le premier faisceau (R1, R2, R3) le mieux classé
- sélectionner (620) le deuxième faisceau (T1L1, T2L1) le mieux classé

- tester (630) si le premier faisceau sélectionné (R1, R2, R3) et le deuxième faisceau sélectionné (T1L1, T2L1 ; T1L2, T2L2, T3L2, T4L2) établissent une liaison de communication (30), et

-- si une liaison de communication (30) est établie comprenant au moins un faisceau groupé (T1L1, T2L1), le procédé comprend les étapes consistant à :

--- diviser (636) le faisceau groupé (T1L1, T2L1) en deux ou plusieurs faisceaux (T1L2, T2L2, T3L2, T4L2), en prévoyant (637) pour chacun des faisceaux (T1L2, T2L2, T3L2, T4L2) divisés du faisceau groupé (T1L1, T2L1 ; T1L2) une probabilité mise à jour pour établir une liaison de communication (30) sur la base des données de faisceau et de la connaissance que le faisceau groupé (T1L1, T2L1) a établi une liaison de communication (30), fournir (638) un classement de faisceau pour les faisceaux (T1L2, T2L2, T3L2, T4L2) sur la base des données de faisceau et de la probabilité mise à jour pour établir une liaison de communication (30), sélectionner (610) le premier faisceau (R1, R2, R3) le mieux classé, sélectionner (620) le deuxième faisceau le mieux classé (T1L2, T2L2, T3L2, T4L2) et répéter le test (630) pour savoir si le premier faisceau sélectionné (R1, R2, R3) et le deuxième faisceau sélectionné (T1L2, T2L2, T3L2, T4L2) établissent une liaison de communication (30),

-- si une liaison de communication (30) est établie ne comprenant pas de faisceau groupé (T1L1, T2L1), le procédé comprend l'étape consistant à :

--- mettre à jour (670) les données de faisceau en conséquence, et

-- si aucune liaison de communication n'est établie :

--- déterminer (640) si une probabilité cumulative de deuxièmes faisceaux testés (T1L1, T2L1 ; T1L2, T2L2, T3L2, T4L2) est égale ou supérieure à une probabilité de seuil de deuxième faisceau, et

---- si la probabilité cumulative des deuxièmes faisceaux testés (T1L1, T2L1 ; T1L2, T2L2, T3L2, T4L2) est égale ou supérieure à la probabilité seuil de deuxième faisceau :

----- déterminer (650) si une probabilité cumulative des premiers faisceaux testés (R1, R2, R3) est égale ou supérieure à une probabilité seuil des premiers faisceaux, et

------ si la probabilité cumulative des premiers faisceaux testés (R1, R2, R3) est égale ou supérieure à la probabilité seuil des premiers faisceaux :

------- effectuer (660) une recherche de faisceaux multi-niveaux pour déterminer un premier faisceau (R1, R2, R3) et un deuxième faisceau (T1LI, T2L1, T1L2, T2L2, T3L2, T4L2) qui établissent une liaison de communication (30) et
------- mettre à jour (670) les données de faisceau en conséquence

------ si la probabilité cumulative des premiers faisceaux testés (R1, R2, R3) est inférieure à la probabilité seuil des premiers faisceaux :

------- sélectionner (680) un premier faisceau classé suivant (R1, R3), sélectionner (620) le deuxième faisceau le mieux classé (T1L1, T2L1 ; T1L2, T2L2, T3L2, T4L2) et répéter le test (630) pour savoir si le premier faisceau sélectionné (R1, R3) et le deuxième faisceau sélectionné (T1L1, T2L1 ; T1L2, T2L2, T3L2, T4L2) établissent une liaison de communication (30),

---- si la probabilité cumulative des deuxièmes faisceaux testés (T1L1, T2L1 ; T1L2, T2L2, T3L2, T4L2) est inférieure à la probabilité seuil des deuxièmes faisceaux :

----- sélectionner (690) un deuxième faisceau classé suivant (T1L1, T2L1, T1L2, T2L2, T3L2, T4L2) et répéter le test pour savoir si le premier faisceau sélectionné (R1, R2, R3) et le deuxième faisceau sélectionné (T1L1, T2L1 ; T1L2, T2L2, T3L2, T4L2) établissent une liaison de communication (30),

dans lequel la recherche de faisceaux à plusieurs niveaux comprend une étape initiale consistant à :

- regrouper des faisceaux (310) (T1L2, T2L2, T3L2, T4L2) en un ou plusieurs faisceaux groupés (T1L1, T2L1), chaque faisceau groupé (T1L1, T2L1) comprenant deux ou plusieurs faisceaux (T1L2, T2L2, T3L2, T4L2), et

dans lequel les étapes suivantes sont répétées jusqu'à ce qu'une liaison de communication (30) soit établie qui ne comprend pas de faisceau groupé (T1L1, T2L1) :

- sélectionner (320) un premier faisceau (R1, R2, R3) et un deuxième faisceau (T1L1, T2L1 ; T1L2, T2L2, T3L2, T4L2) sur la base de leur probabilité d'établir une liaison de communication (30), et
- tester (330) si une liaison de communication (30) est établie entre le premier faisceau sélectionné (R1, R2, R3) et le deuxième faisceau sélectionné (T1L1, T2L1 ; T1L2, T2L2, T3L2, T4L2), dans lequel

-- si aucune liaison de communication (30) n'est établie, le procédé comprend les étapes consistant à :

--- sélectionner (340) un autre premier faisceau (R1, R2, R3) et/ou un autre deuxième faisceau (T1L1, T2L1 ; T1L2, T2L2, T3L2, T4L2) sur la base de leur probabilité d'établir une liaison de communication et répéter le test pour savoir si une liaison de communication (30) est établie entre le premier faisceau sélectionné (R1, R2, R3) et le deuxième faisceau sélectionné (T1L1, T2L1 ; T1L2, T2L2, T3L2, T4L2),

-- si une liaison de communication (30) comprenant au moins un faisceau groupé (T1L1, T2L1) est établie, le procédé comprend les étapes consistant à :

--- diviser (360) le faisceau groupé (T1L1, T2L1) en deux ou plusieurs faisceaux (T1L2, T2L2, T3L2, T4L2), et
--- fournir (370) pour chacun des faisceaux (T1L2, T2L2, T3L2, T4L2) séparés du faisceau groupé (T1L1, T2L1) une probabilité mise à jour pour établir une liaison de communication (30) sur la base des données de faisceau et des connaissances que le faisceau groupé (T1L1, T2L1) a établi une liaison de communication (30), et

-- si une liaison de communication (30) est établie ne comprenant pas de faisceau groupé (T1L1, T2L1), le procédé comprend l'étape consistant à :

--- mettre à jour (380) les données de faisceau en conséquence.

6. Procédé selon la revendication 1 comprenant l'étape consistant à :

- déterminer une entropie de faisceau du système à entrées multiples et sorties multiples (100) qui est indicative de la fonction de masse de probabilité des faisceaux et dépend d'un niveau de caractère aléatoire de la distribution de probabilité pour établir une liaison de communication (30), l'entropie de faisceau étant défini comme

$$\text{Entropie du faisceau} \quad = -\sum_{i=1}^{N} p_i \log p_i$$

où $p_i$ est la probabilité du faisceau i d'établir une liaison de communication et $N$ est le nombre total de faisceaux ; et dans lequel le procédé selon la revendication 4 est exécuté si l'entropie du faisceau est supérieure à une première entropie de faisceau seuil,
dans lequel le procédé selon la revendication 5 est exécuté si l'entropie du faisceau est inférieure ou égale à la première entropie du faisceau et supérieure à une deuxième entropie du faisceau seuil, et
dans lequel le procédé selon la revendication 2 ou 3 est exécuté si l'entropie du faisceau est inférieure ou égale à la deuxième entropie du faisceau seuil.

7. Procédé selon la revendication 6, dans lequel la première entropie de faisceau seuil et/ou la deuxième entropie de faisceau seuil sont réglables sur la base de données de faisceau.

8. Procédé selon l'une des revendications 1 à 7, dans lequel les données de faisceau comprennent des données historiques spécifiques à l'utilisateur générées par l'exploitation du système à entrées multiples et à sorties multiples (100) par un utilisateur spécifique.

9. Procédé selon l'une des revendications 1 à 8 comprenant l'étape consistant à :

- établir une liaison de communication (30) entre le premier faisceau sélectionné (R1, R2, R3) et le deuxième faisceau sélectionné (T1L1, T2L1 ; T1L2, T2L2, T3L2, T4L2 ; T1, ..., T9) pour communiquer des données.

10. Procédé selon l'une des revendications 1 à 9, dans lequel une liaison de communication (30) est considérée comme établie lorsque pour une distance supérieure à une distance seuil entre les émetteurs (26) et les récepteurs (28), une valeur de puissance reçue est supérieur à une valeur de puissance seuil, un débit de données reçu est supérieur à un débit de données seuil, une indication d'intensité de signal reçu est supérieure à une indication d'intensité de signal reçu seuil, et/ou une communication de données sur la liaison de communication présente un rapport signal sur bruit supérieur un rapport signal sur bruit seuil.

11. Module de formation de faisceaux radiofréquence (10) pour sélectionner des faisceaux (T1L1, T2L1 ; T1L2, T2L2, T3L2, T4L2 ; T1, ..., T9 ; R1 , R2, R3) pour un système à entrées multiples et sorties multiples (100) dans lequel le système à entrées multiples et sorties multiples comprend un dispositif émetteur (22) comprenant de multiples éléments d'antenne émetteur (26) et un dispositif récepteur (24) comprenant de multiples éléments d'antenne de réception (28) pour fournir des premiers faisceaux (R1, R2, R3) et des deuxièmes faisceaux (T1L1, T2L1 ; T1L2, T2L2, T3L2, T4L2 ; T1, ..., T9), le module de formation de faisceaux radiofréquence (10) comprenant :

- une base de données (14) pour stocker des données de faisceau,
- un fournisseur de probabilité de faisceau (16) configuré pour fournir pour chacun des faisceaux (T1L1, T2L1 ; T1L2, T2L2, T3L2, T4L2 ; T1, ..., T9, R1, R2, R3) une probabilité d'établissement d'une liaison de communication (30) sur la base des données de faisceau, et
- un sélecteur de faisceau (20) configuré pour sélectionner des premiers faisceaux (R1, R2, R3) et des deuxièmes faisceaux (T1L1, T2L1 ; T1L2, T2L2, T3L2, T4L2 ; T1, ..., T9) sur la base de leur probabilité d'établir une liaison de communication (30) dans un processus itératif jusqu'à ce qu'une liaison de communication (30) soit établie entre un premier faisceau sélectionné (R1, R2, R3) et un deuxième faisceau sélectionné (T1L1, T2L1 ; T1L2, T2L2, T3L2, T4L2 ; T1, ..., T9), dans lequel les premiers faisceaux (R1, R2, R3) sont des faisceaux émetteurs fournis par des éléments d'antenne émetteur (26) ou des faisceaux récepteurs (R1, R2, R3) fournis par des éléments d'antenne de réception (28), dans lequel si les premiers faisceaux (R1, R2, R3) sont des faisceaux émetteurs fournis par les éléments d'antenne émetteur (26), puis les deuxièmes faisceaux (T1L1, T2L1 ; T1L2, T2L2, T3L2, T4L2 ; T1, ..., T9) sont des faisceaux récepteurs fournis par les éléments d'antenne de réception (28), et si les premiers faisceaux (R1, R2, R3) sont des faisceaux récepteurs (R1, R2, R3) fournis par les éléments d'antenne de réception (28), puis les deuxièmes faisceaux (T1L1, T2L1 ; T1L2, T2L2, T3L2, T4L2 ; T1, ..., T9) sont des faisceaux émetteurs (T1L1, T2L1 ; T1L2 , T2L2, T3L2, T4L2 ; T1, ..., T9) fournis par les éléments d'antenne émetteur (26),

dans lequel les données de faisceau, sur la base desquelles la probabilité d'établissement de la liaison de communication (30) est fournie, comprennent en outre des données de modèle générées sur la base d'hypothèses de modèle pour le système à entrées et sorties multiples, les données de modèle comprenant des données d'historique analysées statistiquement d'autres utilisateurs.

12. Système de formation de faisceaux radiofréquence (100) comprenant :

- un dispositif émetteur (22) comprenant de multiples éléments d'antenne émetteur (26),
- un dispositif récepteur (24) comprenant plusieurs éléments d'antenne de réception (28),
dans lequel les éléments d'antenne émetteur (26) et les éléments d'antenne de réception (28) sont configurés pour fournir des premiers faisceaux (R1, R2, R3) et des deuxièmes faisceaux (T1L1, T2L1 ; T1L2, T2L2, T3L2, T4L2 ; T1, ..., T9), dans lequel les premiers faisceaux (R1, R2, R3) sont des faisceaux émetteurs fournis par les éléments d'antenne émetteur (26) ou des faisceaux récepteurs (R1, R2, R3) fournis par les éléments d'antenne de réception (28), dans lequel si les premiers faisceaux (R1, R2, R3) sont des faisceaux émetteurs fournis par les éléments d'antenne émetteur (26), puis les deuxièmes faisceaux (T1L1, T2L1 ; T1L2, T2L2, T3L2, T4L2 ; T1, ..., T9) sont des faisceaux récepteurs fournis par les éléments d'antenne de réception (28), et si les premiers faisceaux (R1, R2, R3) sont des faisceaux récepteurs (R1, R2, R3) fournis par les éléments d'antenne de réception (28), alors les deuxièmes faisceaux (T1L1, T2L1 ; T1L2, T2L2 , T3L2, T4L2 ; T1, ..., T9) sont des faisceaux émetteurs (T1L1, T2L1 ; T1L2, T2L2, T3L2, T4L2 ; T1, ..., T9) fournis par les éléments d'antenne émetteur (26), et

dans lequel au moins l'un parmi le dispositif émetteur (22) et le dispositif récepteur (24) comprend le module de formation de faisceaux radiofréquence (10) selon la revendication 11.

13. Produit formant programme informatique pour sélectionner des faisceaux (T1L1, T2L1 ; T1L2, T2L2, T3L2, T4L2 ; T1, ..., T9 ; R1, R2, R3) dans un système à entrées multiples et sorties multiples (100), dans lequel le produit formant programme informatique comprend un moyen de code de programme pour amener le module de formation de faisceaux radiofréquence (10) selon la revendication 11 à exécuter le procédé tel que défini dans la revendication 1, lorsque le produit formant programme informatique est exécuté sur le module de formation de faisceaux radiofréquence (10).

FIG. 1

EP 3 726 739 B1

FIG. 2A

EP 3 726 739 B1

FIG. 2B

FIG. 3

FIG. 4

FIG. 5

FIG. 6

FIG. 7

EP 3 726 739 B1

FIG. 8

EP 3 726 739 B1

EP 3 726 739 B1

900

910

500

800

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2008310380 A1

- WO 2018034703 A1

### Non-patent literature cited in the description

- **S. HUR et al.** Multilevel millimeter wave beamforming for wireless backhaul. *IEEE GLOBECOM Workshops,* December 2011, 253-257
- **K. K. TIWARI et al.** Noise performance of Orthogonal RF beamforming for millimeter wave massive MIMO communication systems. *The Tenth International Conference of Wireless Communications and Signal Processing (WCSP),* October 2018, 1-7

- **K. K. TIWARI et al.** Noise performance of Orthogonal RF beamforming for THz Radio Communications. *The Ninth IEEE Annual Computing and Communication Workshop and Conference (CCWC),* January 2019, 746-751
- **C. ALKHATEEB et al.** Limited feedback hybrid precoding for multi-user millimeterwave systems. *IEEE Transactions on Wireless Communications,* November 2015, vol. 14 (11), 6481-6494